# EUROPEAN PATENT SPECIFICATION

(11) **EP 4 017 078 B1**
(45) Date of publication and mention of the grant of the patent: **25.06.2025**
(21) Application number: 20855520.1
(22) Date of filing: 11.08.2020
(51) Int. Cl.: H04W 24/08

(54) **METHOD AND DEVICE USED FOR MEASUREMENT**
VERFAHREN UND VORRICHTUNG ZUR MESSUNG
PROCÉDÉ ET DISPOSITIF UTILISÉS POUR UNE MESURE

(30) Priority: 16.08.2019 CN 201910759270
(43) Date of publication of application: 22.06.2022
(73) Proprietor: Huawei Technologies Co., Ltd., Shenzhen, Guangdong 518129 (CN)
(72) Inventor: ZHENG, Lili, Shenzhen, Guangdong 518129 (CN); ZHANG, Hongping, Shenzhen, Guangdong 518129 (CN); ZENG, Qinghai, Shenzhen, Guangdong 518129 (CN)
(74) Representative: Pfenning, Meinig & Partner mbB
(86) International application number: PCT/CN2020/108357
(87) International publication number: WO 2021/031921

(56) References cited:
- EP-A1- 2 088 805
- WO-A1-2019/098156
- CN-A- 110 100 492
- US-A1- 2018 324 678
- US-A1- 2018 324 678
- US-A1- 2019 098 590
- US-A1- 2019 174 343
- US-A1- 2019 239 106
- US-A1- 2020 314 946
- MEDIATEK INC: "Measurement Gaps in NR", vol. RAN WG2, no. Berlin, Germany; 20170821 - 20170825, 20 August 2017 (2017-08-20), XP051318153, Retrieved from the Internet <URL:http://www.3gpp.org/ftp/Meetings_3GPP_SYNC/RAN2/Docs/> [retrieved on 20170820]
- ERICSSON: "Measurement gaps and scaling for measurements of multiple frequency", 3GPP TSG-RAN WG4 MEETING #AH 1801; R4-1800184, 3RD GENERATION PARTNERSHIP PROJECT (3GPP), SOPHIA-ANTIPOLIS CEDEX ; FRANCE, 15 January 2018 (2018-01-15), San Diego, USA; 20180122 - 20180126, XP051387899

## Description

### TECHNICAL FIELD

This application relates to the communication field, and in particular, to a measurement method and apparatus.

### BACKGROUND

To avoid high power consumption caused by unnecessary search performed by a terminal device during measurement, a serving cell configures a synchronization signal/physical broadcast channel block measurement timing configuration (SS/PBCH Block Measurement Timing Configuration, SMTC) for the terminal device in a measurement configuration, and the terminal device only needs to perform measurement in a measurement window indicated by the SMTC.

A measurement gap (measurement gap) is a period of time that is configured by the serving cell for the terminal device and during which the terminal device is not required to receive a physical downlink control channel (physical downlink control channel, PDCCH)/physical downlink shared channel (physical downlink shared channel, PDSCH), and send a physical uplink control channel (physical uplink control channel, PUCCH)/physical uplink shared channel (physical uplink shared channel, PUSCH). That is, the measurement gap is an occasion that is configured by the serving cell for the terminal device and during which data transmission does not need to be performed between the terminal device and the serving cell. When a measurement task requires a measurement gap, the terminal device performs measurement only in an occasion of the measurement gap.

When the measurement task indicated by the SMTC requires the measurement gap, if the measurement gap cannot cover the measurement window indicated by the SMTC, because the terminal device performs measurement only in the occasion of the measurement gap, a problem that the terminal device cannot complete the measurement task indicated by the SMTC may occur.

In an existing measurement gap configuration method, a case in which the measurement gap cannot cover the measurement window indicated by the SMTC may occur. As a result, the terminal device cannot complete the measurement task that requires the measurement gap.

A terminal device for communicating with the base station device is described in WO 2019/098156 A1 to be provided with: a reception unit that receives an RRC reconfiguration message from the base station device; a transmission unit that transmits, to the base station device, an RRC reconfiguration completion message in response to the RRC reconfiguration message; and a control unit that generates the RRC reconfiguration completion message, wherein, on the basis of first downlink bandwidth part (BWP) information and 0 or more sets of second downlink BWP information of a serving cell, the RRC reconfiguration completion message is generated so as to include information which enables identification as to whether a measurement gap is necessary for measuring serving cell quality of the serving cell. US 2018/324678 describes a method of operating a user equipment (UE) that includes receiving, from a base station (BS), sets of higher-layer configuration information. When configured for mobility measurement on SS and physical broadcast channel (PBCH) (SS/PBCH) blocks, the UE identifies, based on one of the sets of higher-layer configuration information, a first set of SS/PBCH blocks configured for the mobility measurement, and measures and reports mobility measurement quantities for the first set of SS/PBCH blocks. When configured for receiving a physical downlink shared channel (PDSCH), the UE identifies, based on another of the sets of higher-layer configuration information, a second set of SS/PBCH blocks configured for the UE, and receives the PDSCH with rate matching around an SS/PBCH block included in the second set of SS/PBCH blocks.

### SUMMARY

This application provides a measurement method and apparatus, to ensure to some extent that a measurement gap can cover a measurement window indicated by an SMTC. The present invention is defined in the independent claims. Particular embodiments are specified by the dependent claims.

According to a first aspect, a measurement method is provided. The method may be implemented by a terminal device, or may be implemented by a component (for example, a chip or a circuit) that may be used in the terminal device. The method includes: receiving N SMTCs; and respectively obtaining M measurement gaps based on M SMTCs in the N SMTCs, where N and M are positive integers, and M is less than or equal to N.

The method further includes: receiving third indication information, where the third indication information is used to indicate that L measurement gaps in the M measurement gaps are shared, and L is a positive integer less than or equal to M.

That one measurement gap is shared indicates that the measurement gap can be applied not only to an SMTC of a current measurement object, but also to an SMTC of another measurement object. The current measurement object indicates the measurement object to which the SMTC corresponding to the measurement gap belongs.

The method further includes: receiving fourth indication information, where the fourth indication information is used to indicate sharing information of each of the L measurement gaps.

Sharing information of one measurement gap is used to indicate an SMTC with which the measurement gap is shared.

That the M measurement gaps may be respectively determined by the M SMTCs may be considered that the M SMTCs have a function as a measurement gap respectively.

One SMTC (denoted as an SMTC 1) in the M SMTC is used as an example. A measurement gap determined by the SMTC 1 can cover a part or all of measurement windows indicated by the SMTC 1.

Compared with an SMTC in a current technology, the SMTC in this application may have a function as a measurement gap.

In this application, the measurement gap is determined by the SMTC, so that it can be ensured that the measurement gap can cover the measurement window indicated by the SMTC. Further, it can be ensured to some extent that the measurement gap can cover a measurement window of a measurement task requiring the measurement gap.

In addition, because the measurement gap may be determined by the SMTC, a network device may not need to deliver additional configuration information of the measurement gap. This reduces signaling.

Further, because the measurement gap may be determined by the SMTC, a time domain position of the measurement gap is a subset of a time domain position of the measurement window indicated by the SMTC. In this way, on a premise that the measurement gap covers the measurement window indicated by the SMTC, time for data transmission, between the terminal device and a serving cell, that is interrupted in the measurement gap can be reduced.

It should be noted that the SMTC mentioned in this specification indicates a window that occurs periodically, and the measurement gap mentioned in this specification indicates a window that occurs periodically.

A window in a period may be denoted as an occasion (occasion). Unless otherwise specified, the SMTC mentioned in this specification indicates a window that occurs periodically, and is not only an occasion in a period. Unless otherwise specified, the measurement gap mentioned in this specification indicates a window that occurs periodically, and is not only an occasion in a period.

It should be further noted that one or more SMTCs in this specification may be replaced with one or more sets of SMTCs, and one or more measurement gaps in this specification may be replaced with one or more sets of measurement gaps.

It should be further noted that the SMTC in this application indicates a window that is configured by the network device for the terminal device and that is used to perform measurement based on a synchronization signal/physical broadcast channel block ((synchronization signal, SS)/(physical broadcast channel, PBCH) block, SSB). If another name is used to describe the window that is configured by the network device for the terminal device and that is used to perform measurement based on the SSB in future technology evolution, the "SMTC" in this embodiment of this application may be replaced with a corresponding name.

With reference to the first aspect, in a possible implementation of the first aspect, M is an integer greater than or equal to 2. Because M is less than or equal to N, it is equivalent that N is also an integer greater than or equal to 2.

It should be understood that, in the technical solution provided in this application, that a plurality of SMTCs have a function as a measurement gap may be implemented, and this is equivalent to that a plurality of measurement gaps are configured. On one hand, the plurality of measurement gaps can cover the plurality of SMTCs. On the other hand, the plurality of measurement gaps may be determined by using the plurality of SMTCs, and the network device does not need to deliver configuration information of the plurality of measurement gaps. Therefore, signaling can be saved.

With reference to the first aspect, in a possible implementation of the first aspect, the method further includes: receiving first indication information, where the first indication information is used to indicate that the M SMTCs have a funciton as a measuerment gap respectively.

Optionally, a manner in which the network device delivers the N SMTCs to the terminal device is as follows: The network device sends a radio resource control (radio resource control, RRC) reconfiguration message to the terminal device, where the RRC reconfiguration message includes a measurement configuration, the measurement configuration includes one or more measurement objects, and each measurement object includes one or more SMTCs. It should be understood that a total quantity of SMTCs in all of the measurement objects in the measurement configuration is N.

Optionally, in an implementation, the first indication information indicates that a part or all of the SMTCs in the measurement configuration have a function as a measurement gap.

Optionally, the first indication information may be jointly delivered with the N SMTCs. For example, in this implementation, the first indication information may be carried in the measurement configuration.

Alternatively, the first indication information may be separately delivered from the N SMTCs.

Optionally, in another implementation, the first indication information indicates that an SMTC of a part or all of the measurement objects in the RRC reconfiguration message has a function as a measurement gap.

That an SMTC of one measurement object has a function as a measurement gap indicates that a part or all of SMTCs of the measurement object have a function as a measurement gap respectively.

It is assumed that one measurement object includes two SMTCs. That the SMTCs of the measurement object have a function as a measurement gap indicates that both the two SMTCs of the measurement object have a function as a measurement gap respectively, or the first SMTC or the second SMTC of the measurement object has a function as a measurement gap.

The first indication information may be jointly delivered with the N SMTCs.

In this implementation, the first indication information may be carried in the measurement object.

Optionally, that all of the measurement objects in the measurement configuration carry the first indication information indicates that an SMTC of each measurement object has a function as a measurement gap.

Optionally, in the measurement configuration, that a part of the measurement objects carry the first indication information, and the other part of the measurement objects do not carry the first indication information indicates that an SMTC of the part of the measurement objects that carry the first indication information has a function as a measurement gap, and an SMTC of the other part of the measurement objects that do not carry the first indication information does not have a function as a measurement gap.

Alternatively, the first indication information may be separately delivered from the N SMTCs.

Optionally, in some implementations, it may be further specified in a protocol that the M SMTCs in the N SMTCs have a function as a measurement gap respectively.

With reference to the first aspect, in a possible implementation of the first aspect, the method further includes: receiving second indication information, where the second indication information is used to indicate proportions respectively occupied by the M measurement gaps in the M SMTCs; and the respectively obtaining M measurement gaps based on M SMTCs in the N SMTCs includes: determining the M measurement gaps based on the second indication information and the M SMTCs.

Optionally, in some implementations, whether the measurement gap determined based on the SMTC is exclusive or shared may alternatively be specified in a protocol.

With reference to the first aspect, in a possible implementation of the first aspect, the method further includes: receiving fifth indication information, where the fifth indication information is used to indicate measurement gap types of the M measurement gaps, and the measurement gap type includes any one or more of the following: a user equipment-level measurement gap, a first frequency range (FR1)-level measurement gap, and a second frequency range (FR2)-level measurement gap.

With reference to the first aspect, in a possible implementation of the first aspect, the M measurement gaps determined by the M SMTCs are validated by default.

For example, when the terminal device performs measurement tasks indicated by the M SMTCs, the M measurement gaps are validated by default. In other words, when performing the measurement tasks indicated by the M SMTCs, the terminal device may interrupt data transmission with the serving cell.

With reference to the first aspect, in a possible implementation of the first aspect, the M measurement gaps determined by the M SMTCs are validated only when a measurement task requires a measurement gap.

Optionally, when measurement indicated by a first SMTC in the M SMTCs requires a measurement gap, the method further includes: performing measurement by using a first measurement gap in the M measurement gaps, where the first measurement gap is obtained by the first SMTC.

For example, if a measurement task indicated by the first SMTC requires a measurement gap, the terminal device may validate the first measurement gap, that is, the terminal device may interrupt data transmission with the serving cell when performing the measurement task indicated by the first SMTC. If the measurement task indicated by the first SMTC does not require a measurement gap, the terminal device may not validate the first measurement gap, that is, the terminal device may further maintain data transmission with the serving cell when performing the measurement task indicated by the first SMTC.

In this application, the terminal device may determine, based on a measurement requirement, whether to validate the measurement gap determined by the SMTC, so that time for communication, between the terminal device and the network device, that is interrupted in the measurement gap can be effectively reduced.

It may be learned that, in the method provided in the first aspect, the measurement gap is determined by the SMTC, so that it can be ensured that the measurement task indicated by the SMTC has a measurement gap configuration. In other words, it can be ensured that the measurement gap covers the measurement window indicated by the SMTC. In addition, because the measurement gap may be determined by the SMTC, the network device may not need to deliver additional configuration information of the measurement gap. This reduces signaling.

According to the first aspect, the solutions provided in this application are described from a perspective of the terminal device, and according to a second aspect below, the solutions provided in this application are described from a perspective of the network device. It should be understood that descriptions in the second aspect correspond to descriptions in the first aspect. For explanations and beneficial effects of related content described in the second aspect, refer to the descriptions in the first aspect. Details are not described herein again.

According to a second aspect, a measurement method is provided. The method may be implemented by a network device, or may be implemented by a component (for example, a chip or a circuit) that may be used in the network device. The method includes: generating N SMTCs, where M SMTCs in the N SMTCs have a function as a measurement gap; and sending the N SMTCs to a terminal device, so that the terminal device respectively obtains M measurement gaps based on the M SMTCs.

That one SMTC has a function as a measurement gap indicates that one measurement gap that can cover a part or all of measurement windows indicated by the SMTC may be determined by the SMTC.

Compared with an SMTC in the current technology, the SMTC in this application may have a function as a measurement gap.

In this application, the measurement gap is determined by the SMTC, so that it can be ensured that the measurement gap can cover the measurement window indicated by the SMTC. Further, it can be ensured to some extent that the measurement gap can cover a measurement window of a measurement task requiring the measurement gap.

In addition, because the measurement gap may be determined by the SMTC, the network device may not need to deliver additional configuration information of the measurement gap. This reduces signaling.

Further, because the measurement gap may be determined by the SMTC, a time domain position of the measurement gap is a subset of a time domain position of the measurement window indicated by the SMTC. In this way, on a premise that the measurement gap covers the measurement window indicated by the SMTC, time for data transmission, between the terminal device and a serving cell, that is interrupted in the measurement gap can be reduced.

The method further includes: sending third indication information to the terminal device, where the third indication information is used to indicate that L measurement gaps in the M measurement gaps are shared, and L is a positive integer less than or equal to M.

The method further includes: sending fourth indication information to the terminal device, where the fourth indication information is used to indicate sharing information of each of the L measurement gaps, and the sharing information of each measurement gap includes information about at least one SMTC in the N SMTCs except the M SMTCs. Sharing information of one measurement gap is used to indicate an SMTC with which the measurement gap is shared.

With reference to the second aspect, in a possible implementation of the second aspect, the method further includes: sending first indication information to the terminal device, where the first indication information is used to indicate that the M SMTCs have a function as a measurement gap respectively.

With reference to the second aspect, in a possible implementation of the second aspect, the method further includes: sending second indication information to the terminal device, where the second indication information is used to indicate proportions respectively occupied by the M measurement gaps in the M SMTCs.

With reference to the second aspect, in a possible implementation of the second aspect, the method further includes: sending fifth indication information to the terminal device, where the fifth indication information is used to indicate measurement gap types of the M measurement gaps, and the measurement gap type includes any one or more of the following: a user equipment-level measurement gap, a first frequency range (FR1)-level measurement gap, and a second frequency range (FR2)-level measurement gap.

With reference to the second aspect, in a possible implementation of the second aspect, when measurement indicated by a first SMTC in the M SMTCs requires a measurement gap, the method further includes: stopping data transmission with the terminal device in a first measurement gap in the M measurement gaps, where the first measurement gap is obtained by the first SMTC.

Optionally, in an occasion of the M measurement gaps, the network device may also maintain data transmission with the terminal device. Whether the terminal device maintains data transmission with the network device in the occasion of the M measurement gaps may be independently determined by the terminal device.

In the method provided in the first aspect or the second aspect, the measurement gap is determined by the SMTC, so that it can be ensured that the measurement task indicated by the SMTC has a measurement gap configuration. In other words, it can be ensured that the measurement gap covers the measurement window indicated by the SMTC. In addition, because the measurement gap may be determined by the SMTC, the network device may not need to deliver additional configuration information of the measurement gap. This reduces signaling.

A fifth aspect provides a communication apparatus. The communication apparatus may be configured to perform the method according to the first aspect or the second aspect.

Optionally, the communication apparatus may include a module configured to perform the method according to the first aspect or the second aspect.

A sixth aspect provides a communication apparatus. The communication apparatus includes a processor. The processor is coupled to a memory. The memory is configured to store a computer program or instructions. The processor is configured to execute the computer program or the instructions stored in the memory, so that
the method according to the first aspect or the second aspect is performed.

For example, the processor is configured to execute the computer program or the instructions stored in the memory, so that the communication apparatus is enabled to perform
the method according to the first aspect or the second aspect.

Optionally, the communication apparatus includes one or more processors.

Optionally, the communication apparatus may further include the memory coupled to the processor.

Optionally, the communication apparatus may include one or more memories.

Optionally, the memory may be integrated with the processor, or disposed separately.

Optionally, the communication apparatus may further include a transceiver.

For example, the processor may control, by executing the computer program or the instructions stored in the memory, the transceiver to perform signal sending or receiving.

According to a seventh aspect, a chip is provided. The chip includes a processing module and a communication interface. The processing module is configured to control the communication interface to communicate with the outside, and the processing module is further configured to implement the method according to the first aspect or the second aspect, the method performed by the terminal device according to the third aspect or the fourth aspect, or the method performed by the network device according to the third aspect or the fourth aspect.

Optionally, the processing module is a processor.

According to an eighth aspect, a computer-readable storage medium is provided. The computer-readable storage medium stores a computer program (which may also be referred to as instructions or code). The computer program is used to implement the method according to the first aspect or the second aspect, the method performed by the terminal device according to the third aspect or the fourth aspect, or the method performed by the network device according to the third aspect or the fourth aspect.

For example, when the computer program is executed by a computer, the computer is enabled to perform the method according to the first aspect or the second aspect, the method performed by the terminal device according to the third aspect or the fourth aspect, or the method performed by the network device according to the third aspect or the fourth aspect. The computer may be a communication apparatus.

According to a ninth aspect, a computer program product is provided. The computer program product includes a computer program (which may also be referred to as instructions or code). When the computer program is executed by a computer, the computer is enabled to implement the method according to the first aspect or the second aspect, the method performed by the terminal device according to the third aspect or the fourth aspect, or the method performed by the network device according to the third aspect or the fourth aspect. The computer may be a communication apparatus.

### BRIEF DESCRIPTION OF DRAWINGS

FIG. 1 is a schematic diagram of performing, by a network device, a measurement configuration on a terminal device;
FIG. 2 and FIG. 3 are schematic diagrams of communication architectures according to an embodiment of this application;
FIG. 4 is a schematic flowchart of a measurement method according to an embodiment of this application;
FIG. 5 is a schematic diagram of measurement gap sharing according to an embodiment of this application;
FIG. 6 is a schematic diagram of a measurement gap that is actually validated according to an embodiment of this application;
FIG. 7 is a schematic block diagram of a communication apparatus according to an embodiment of this application;
FIG. 8 is another schematic block diagram of a communication apparatus according to an embodiment of this application;
FIG. 9 is a schematic diagram of a structure of a terminal device according to an embodiment of this application; and
FIG. 10 is a schematic diagram of a structure of a network device according to an embodiment of this application.

### DESCRIPTION OF EMBODIMENTS

The following describes technical solutions of this application with reference to accompanying drawings.

Unless otherwise defined, all technical and scientific terms used in this specification have a same meaning as that usually understood by a person skilled in the art of this application. The terms used in the specification of this application are merely for the purpose of describing specific embodiments, and are not intended to limit this application.

To better understand embodiments of this application, the following first describes some related concepts.

### 1. Beam (beam)

The beam may be understood as a space resource. The beam may refer to a transmit or receive precoding vector having energy transmission directivity.

The transmit or receive precoding vector may be identified by using index information. Optionally, the index information may correspond to a resource identity (identity, ID) for configuring a terminal device. For example, the index information may correspond to an identifier or a resource for configuring a channel state information-reference signal (channel state information-reference signal, CSI-RS) of the terminal device. For another example, the index information may correspond to an identifier or a resource for configuring a synchronization signal/physical broadcast channel block ((synchronization signal, SS)/(physical broadcast channel, PBCH) block, SSB) of the terminal device. For still another example, the index information may correspond to an identifier or a resource for configuring an uplink sounding reference signal (sounding reference signal, SRS) of the terminal. Optionally, the index information may alternatively be a signal carried by a beam, or index information explicitly or implicitly carried by a channel.

The energy transmission directivity may mean that precoding processing is performed on a signal to be sent by using the precoding vector, a signal on which the precoding processing is performed has spatial directivity, and a signal, on which the precoding processing is performed, that is received by using the precoding vector has a relatively good receive power. For example, a signal-to-noise ratio of receiving and demodulation is satisfied.

Alternatively, the energy transmission directivity may also mean that same signals, sent from different spatial positions, that are received by using the precoding vector have different receive powers.

Optionally, a same communication apparatus (for example, a terminal device or a network device) may have different precoding vectors, and different communication devices may also have different precoding vectors. It should be understood that different precoding vectors correspond to different beams. For a configuration or capability of the communication apparatus, one communication apparatus may use one or more of a plurality of different precoding vectors at a same moment, that is, one communication apparatus may simultaneously form one or more beams.

The synchronization signal/physical broadcast channel block (SSB) mentioned above may include any one or more of the following: a primary synchronization signal (primary synchronization signal, PSS), a secondary synchronization signal (secondary synchronization signal, SSS), a physical broadcast channel (physical broadcast channel, PBCH), or a demodulation reference signal (demodulation reference signal, PBCH-DMRS).

The PBCH-DMRS is used to demodulate the PBCH. For example, the PBCH may carry master information block (master information block, MIB) content.

The PSS and the SSS may be used for any one or more of the following tasks of user equipment (user equipment, UE): downlink synchronization, cell identity (identity, ID) obtaining, cell signal quality measurement, initial beam selection, or radio resource management (radio resource management, RRM) measurement. The downlink synchronization may include clock synchronization, frame synchronization, and symbol synchronization. Cell signal quality may be represented by any one or more of the following: a reference signal received power (reference signal received power, RSRP), reference signal received quality (reference signal received quality, RSRQ), a signal to interference plus noise ratio (signal to interference plus noise ratio, SINR). For example, the cell signal quality measurement may be mainly performed by using SSS measurement.

### 2. Measurement

Mobility management refers to a general term of related content used for ensuring that a communication link between a network device and UE is not interrupted due to movement of the UE. Mobility management is an important part in wireless mobile communication.

Based on a state of the UE, mobility management may be divided into two parts: idle state (RRC_IDLE state)/inactive state (RRC_INACTIVE state) mobility management and connected state (RRC_CONNECTED state) mobility management. In an idle/inactive state, mobility management mainly refers to a process of cell selection/reselection (cell selection/reselection). In a connected state, mobility management mainly refers to cell handover (handover).

Cell selection/reselection and cell handover are both performed based on measurement results. Therefore, mobility measurement is the basis of mobility management.

Generally, measurement may be divided into two parts: physical layer measurement (layer 1 measurement) and radio resource control (radio resource control, RRC) layer measurement (layer 3 measurement), according to layers related.

At a physical layer, the UE performs measurement of a specified type on a configured measurement resource. For example, a measurement type supported by a new radio (new radio, NR) system or a 5G system includes intra-frequency measurement, inter-frequency measurement, inter-system measurement, and the like.

As an example, for SSB-based measurement, the UE combines measurement results obtained on a plurality of SSBs that have a same SSB index (index) and a same physical cell identifier (physical cell identifier, PCI), to obtain a beam (beam)-level layer 1 measurement result of an SSB corresponding to the SSB index of the cell corresponding to the PCI, and report the layer 1 measurement result to a layer 3.

As another example, for CSI-RS-based measurement, the UE combines measurement results obtained on a plurality of CSI-RS resources that have a same CSI-RS resource identifier (resource identifier) and a same PCI, to obtain a beam (beam)-level layer 1 measurement result of a CSI-RS resource corresponding to the CSI-RS resource identifier of the cell corresponding to the PCI, and report the layer 1 measurement result to a layer 3.

The foregoing process of combining measurement results on a plurality of measurement resources is referred to as layer 1 filtering. After the layer 3 receives the beam-level measurement result reported by a layer 1, the UE needs to select/combine layer 1 measurement results of all beams of a same cell, to derive a cell-level layer 3 measurement result. Then, layer 3 filtering needs to be performed on the obtained cell-level layer 3 measurement result. The measurement result on which the layer 3 filtering is performed is used to verify whether a reporting trigger condition is satisfied and whether final reporting is performed.

Optionally, based on the configuration, the UE may also need to report the beam-level layer 3 measurement result. In this case, the UE may directly perform the layer 3 filtering on the layer 1 measurement results of all beams, and then select a to-be-reported measurement result from measurement results on which the layer 3 filtering is performed for reporting.

When the reporting trigger condition is satisfied, the UE needs to send a measurement report to the network device.

### 3. Measurement configuration

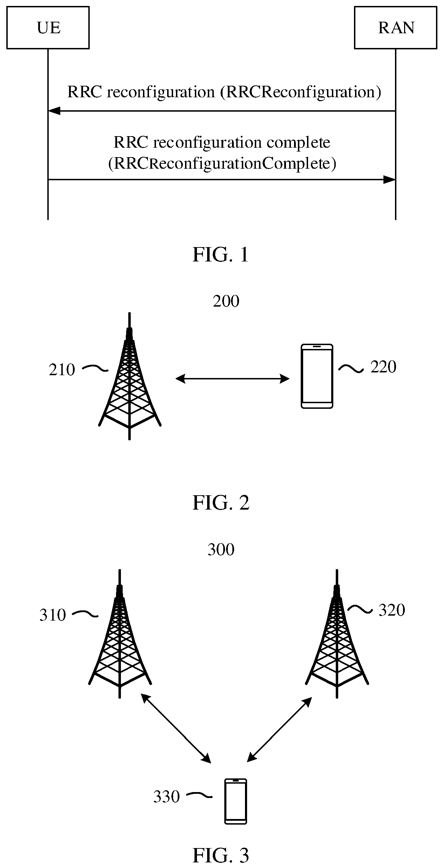

In a measurement configuration phase, the network device sends, to the UE by using signaling, information required for measurement. For example, in a connected state, the information required for measurement may be RRC reconfiguration (RRCReconfiguration) signaling, as shown in FIG. 1. Measurement configuration information is included in a measurement configuration (measConfig) information element of the RRC reconfiguration signaling.

It may be understood that the measurement configuration includes a corresponding measurement object for each service frequency. The network device configures a measurement identity only when a corresponding measurement object, a reporting configuration, and a measurement quantity have been configured for the UE.

After receiving the signaling sent by the network device, the UE correspondingly modifies a measurement configuration database and a measurement report list of the UE, and notifies the network device of a message indicating that modification is successfully performed. As shown in FIG. 1, after receiving the RRC reconfiguration signaling, the UE sends RRC reconfiguration complete (RRCReconfigurationComplete) signaling to the network device, and the RRC reconfiguration complete signaling is used to indicate that the measurement configuration is successfully modified.

As shown in FIG. 1, the network device may be a radio access network (radio access network, RAN) device.

As an example, the measurement configuration information may include configuration information shown in the following (1) to (5).

### (1) Measurement object (measurement object, MO)

In a long term evolution (long term evolution, LTE) system, one measurement object corresponds to one frequency. In a measurement object configuration of one frequency, the network device notifies the UE of information that needs to be known for measuring the frequency, for example, a configuration status of a measurement resource on the frequency and a cell list on the frequency.

In an NR system, for intra-frequency measurement and inter-frequency measurement, information such as a frequency domain/time domain position and a subcarrier spacing of a reference signal to be measured is indicated in a measurement object configuration; and for inter-system E-UTRA measurement, the measurement object corresponds to an E-UTRA frequency. E-UTRA indicates an access network part in the LTE system. E-UTRA is referred to as an evolved UMTS terrestrial radio access network (evolved UMTS terrestrial radio access network), and UMTS is referred to as a universal mobile telecommunications system (universal mobile telecommunications system).

### (2) Reporting configuration (reporting configuration)

In the reporting configuration, the network device notifies the UE of details of specific measurement to be performed, including a measurement type, a reporting trigger manner, a reporting format, and the like.

### (3) Measurement identity (measurement identity)

One measurement identify is a combination of a measurement object and a reporting configuration. The measurement object and the reporting configuration are combined together to determine details of measurement for one measurement object. Any measurement object/reporting configuration may be associated with any reporting configuration/measurement object/a plurality of reporting configurations/measurement objects/zero reporting configuration/measurement object with a same radio access technology (radio access type, RAT).

### (4) Measurement quantity configuration (quantity configuration)

The measurement quantity configuration refers to a configuration of a layer 3 filtering coefficient. Before a measurement quantity that is triggered for verifying whether a reporting trigger condition is satisfied, and before the measurement quantity is finally reported, the layer 3 filtering needs to be performed first. The layer 3 filtering coefficient is notified to the UE by using the measurement quantity configuration.

### (5) Measurement gap (measurement gap) configuration

If a switching of a center frequency is for intra-frequency/inter-frequency/inter-system measurement, measurement and data transmission cannot be simultaneously performed. In this case, the network needs to configure a measurement gap for the UE.

A measurement task is identified by a measurement identity (measID), and measID is associated with a measurement object (measObject, MO) and a reporting configuration (reportConfig).

### 4. Measurement gap (measurement gap)

The measurement gap is a period of time that is configured by the network device for the UE and that does not require the UE to receive a PDCCH/PDSCH and send a PUCCH/PUSCH.

For the UE in a connected state, radio frequency (radio frequency, RF) switching may be performed during measurement. Therefore, data transmission with a serving cell and measurement cannot be performed simultaneously. Currently, the network device configures a measurement gap for the UE in a measurement configuration, and data transmission between the UE and the serving cell is not required in an occasion of the measurement gap, so that the UE can perform measurement.

In the current technology, a measurement gap configuration (measGapConfig) is carried in a measurement configuration (measConfig).

As an example, in the NR system, the measurement gap configuration (measGapConfig) may include the following information (1) to (5).

### (1) Measurement gap type (gap type)

Gap types include gapUE, gapFR1 and gapFR2. GapUE indicates a UE-level measurement gap (per-UE gap). GapFR1 indicates a frequency range FR1-level measurement gap. GapFR2 indicates a frequency range FR2-level measurement gap.

An FR1 and an FR2 are two spectrum ranges (frequency ranges, FRs). In the 3GPP protocol, overall spectrum resources of 5G may be divided into two frequency bands: the FR1 and the FR2.

The FR1 indicates a frequency band whose frequency is lower than 6 GHz. A frequency band lower than 6 GHz may be referred to as sub 6 GHz. The FR1 may be referred to as a low frequency band, and is a primary frequency band of 5G.

A frequency band lower than 3 GHz may be referred to as a sub 3G, and other frequency bands may be referred to as a C-band.

The FR2 indicates a frequency band whose frequency is higher than 6 GHz. A frequency band whose frequency is higher than 6 GHz may also be referred to as a millimeter wave whose frequency is higher than 6 GHz. The FR2 may be referred to as a high frequency band, and is an extended frequency band of 5G.

The UE-level measurement gap (per-UE gap) refers to a measurement gap applicable to both the FR1 and the FR2.

In the per-UE gap, the UE is not required to perform transmission, the UE is not required to receive data from any serving cell except a reference signal used for measurement, and the UE is not required to switch a frequency to a frequency of any serving cell.

The per-UE gap may be considered as interrupting data transmission of all serving cells of the UE.

The frequency range-level measurement gap (per-FR gap) defines a group of measurement gap patterns for each of the FR1 frequency band and the FR2 frequency band, and each group of measurement gap patterns is applicable only to the corresponding frequency band. GapFR1 indicates that the measurement gap is applicable to the FR1, and gapFR2 indicates that the measurement gap is applicable to the FR2.

In the per-FR gap, the UE is not required to perform transmission in a cell on a corresponding frequency band, the UE is not required to receive data from any serving cell on the corresponding frequency band except a reference signal for measurement, and the UE is not required to switch a frequency to a frequency of any serving cell on the corresponding frequency band.

The per-FR gap may be considered as interrupting only data transmission between the UE and the serving cell in the corresponding FR. For example, in an occasion of the per-FR1 gap, the UE only does not perform data transmission with the serving cell in the FR1, and may perform data transmission with the serving cell in the FR2. For another example, in an occasion of the per-FR2 gap, the UE only does not perform data transmission with the serving cell in the FR2, and may perform data transmission with the serving cell in the FR1.

### (2) Gap offset (gapOffset)

GapOffset indicates an offset of the measurement gap.

### (3) Gap length (MGL)

MGL indicates a length of the measurement gap, in milliseconds (ms).

### (4) Gap repetition periodicity (MGRP)

MGRP indicates a repetition period of the measurement gap, in ms.

### (5) Gap timing advance (measurement gap timing advance) (MGTA)

MGTA indicates a timing advance of the measurement gap, in ms.

### 5. Bandwidth part (bandwidth part, BWP)

The BWP is a new concept proposed in the NR standard. The BWP indicates a segment of continuous bandwidth resources configured on a network side for the UE. The BWP may implement a flexible transmission bandwidth configuration on the network side and the UE side.

Application scenarios of the BWP may include the following three scenarios.

Scenario 1: Apply to a low-bandwidth capability UE to access a high-bandwidth network.

Scenario 2: The UE switches between a high BWP and a low BWP, to save power.

Scenario 3: Different BWPs are configured with different numerologies, and carry different services.

Different BWPs may be configured for different UEs, and this may be referred to as a UE-level concept of BWP.

The UE does not need to know a transmission bandwidth on the network side, and only needs to support BWP bandwidth information configured for the UE.

BWPs are classified as follows:
(1) Initial BWP (initial BWP): The BWP is configured in an initial access phase of the UE.
   A signal and a channel during initial access are transmitted in the initial BWP.
(2) Dedicated BWP (dedicated BWP): The BWP is configured for the UE in an RRC connected state.
   One UE can be configured with a maximum of four dedicated BWPs.
(3) Active BWP (active BWP): The BWP is activated by the UE in the RRC connected state at a moment, and is one of the dedicated BWPs.
   In the R15 protocol, the UE in the RRC connected state can have only one active BWP at a moment.
(4) Default BWP (default BWP): When the UE is in the RRC connected state, after a BWP inactivity timer (BWP inactivity timer) of the UE expires, the UE returns to the default BWP.

The default BWP is also one of the dedicated BWPs. The network indicates, by using RRC signaling, a specific configured dedicated BWP for the UE as the default BWP.

In the current technology, gap capability reporting of the UE is not supported. The measurement gap does not need to be configured in the following special scenarios specified in the protocol: "An SSB to be tested is in the active BWP", "the active BWP is intra-frequency measurement of the initial BWP", or "the UE supports the per-FR gap, and a frequency to be tested and a serving frequency are not in the same FR". The network device always configures a measurement gap for the UE.

In the current technology, the measurement gap is configured based on the UE, and the measurement gap configured by the network device for each UE has only one set of measurement gap configurations for each measurement gap type. For example, the network device may configure one per-FR1 gap for each UE, and may configure another per-FR2 gap.

### 6. Synchronization signal/physical broadcast channel block measurement timing configuration (SS/PBCH Block Measurement Timing Configuration, SMTC)

In NR, reference signals on which RRM measurement is based include two types: a synchronization signal/physical broadcast channel block (SSB) reference signal and a channel state information-reference signal (CSI-RS).

As an example, SSBs of a cell in NR are concentrated in a half frame of 5 ms. In time domain, one SSB occupies four orthogonal frequency division multiplexing (orthogonal frequency division multiplexing, OFDM) symbols (OFDM signals, OSs). Table 1 shows a possible position of the first OS of the SSB in time domain.

**Table 1**

| Case (case) | SSB SCS (kHz) | Carrier frequency (carrier frequency) (GHz) | Possible position of the first OS of the SSB in time domain |
|---|---|---|---|
| A | 15 | ≤3 | {2, 8}+14n, n=0, 1 |
| | | 3 to 6 | {2, 8}+14n, n=0, 1, 2, 3 |
| B | 30 | ≤3 | {4, 8, 16, 20}+14n, n=0 |
| | | 3 to 6 | {4, 8, 16, 20}+14n, n=0, 1 |
| C | 30 | ≤3 | {2, 8}+14n, n=0, 1 |
| | | 3 to 6 | {2, 8}+14n, n=0, 1, 2, 3 |
| D | 120 | >6 | {4, 8, 16, 20}+28n, n=0, 1, 2, 3, 5, 6, 7, 8, 10, 11, 12, 13, 15, 16, 17, 18 |
| E | 240 | >6 | {8, 12, 16, 20, 32, 36, 40, 44}+56n, n=0, 1, 2, 3, 5, 6, 7, 8 |

Specific positions at which the network device sends the SSB in the positions shown in Table 1 are an internal implementation of the network device, and this cannot be assumed by the UE. To avoid high power consumption caused by unnecessary search performed by the UE, a concept of SMTC is introduced in NR.

The SMTC is a window that is configured by the network device for the UE for SSB-based measurement. The UE only needs to perform SSB measurement in the SMTC window, and does not need to perform SSB measurement outside the SMTC window.

For intra-frequency measurement in a connected state, the network device may configure at most two SMTC windows for the UE on one frequency. For inter-frequency measurement in a connected state and measurement in an idle state and an inactive state, the network device may configure at most one SMTC window for the UE on one frequency.

A configuration parameter of one SMTC may include the following information.

### (1) SMTC period and offset information (SMTC timing)

The SMTC period may be 5 ms, 10 ms, 20 ms, 40 ms, 80 ms, or 160 ms.

In each SMTC period, a value of the offset, at a granularity of 1 ms, ranges from 0 to the SMTC period minus 1 ms.

For example, a boundary of the SMTC window is aligned with a subframe boundary of a cell for which measurement is configured.

### (2) SMTC duration (SMTC duration)

A granularity of the SMTC duration is also 1 ms, and the duration may be 1 ms, 2 ms, 3 ms, 4 ms, or 5 ms.

At most two SMTC windows in an intra-frequency measurement configuration in a connected state may have different periods, but offsets and duration are the same.

The network device may notify, by using the measurement configuration, the UE of a specific SMTC window to which each cell needs to apply on the frequency. For example, if a cell does not explicitly indicate the SMTC window to which the cell applies, the cell needs to apply to an SMTC window with a longer period.

The SMTC configuration may be carried in a measurement object (measurement object, MO).

It can be learned from descriptions above that the terminal device performs measurement only in the SMTC window. For a measurement task that requires a measurement gap, the terminal device performs measurement only in an occasion of the measurement gap. Therefore, when a measurement task requires a measurement gap, the measurement gap preferably covers a measurement window indicated by the SMTC. When the measurement task indicated by the SMTC requires the measurement gap, if the measurement gap cannot cover the measurement window indicated by the SMTC, because the terminal device performs measurement only in the occasion of the measurement gap, a problem that the terminal device cannot complete the measurement task indicated by the SMTC may occur.

When the network device configures a plurality of SMTCs for the terminal device, and the plurality of SMTCs are not aligned, in an existing measurement gap configuration method, a problem that a measurement gap cannot cover all SMTCs may occur. As a result, measurement tasks indicated by some SMTCs do not have a measurement gap configuration. When measurement gaps are required for these measurement tasks, these measurement tasks cannot be completed.

For the foregoing problem, this application provides a measurement method and apparatus, to ensure to some extent that a measurement gap can cover a measurement window indicated by an SMTC.

The technical solutions in the embodiments of this application may be applied to various communication systems, for example, a 5th generation (5th generation, 5G) system, a new radio (new radio, NR) system, a machine to machine (machine to machine, M2M) system, or another future evolved communication system. This is not limited in the embodiments of this application.

FIG. 2 is a schematic diagram of a communication system 200 to which an embodiment of this application is applicable.

The communication system 200 may include at least one network device, for example, a network device 210 shown in FIG. 2. The communication system 200 may further include at least one terminal device, for example, a terminal device 220 shown in FIG. 2. The network device 210 may communicate with the terminal device 220 through a wireless link.

FIG. 3 is a schematic diagram of a communication system 300 to which an embodiment of this application is applicable.

The communication system 300 may include at least two network devices, for example, network devices 310 and 320 shown in FIG. 3. The communication system 300 may further include at least one terminal device, for example, a terminal device 330 shown in FIG. 3. The terminal device 330 may establish a radio link to the network device 310 and the network device 320 by using a dual connectivity (dual connectivity, DC) technology or a multi-connectivity technology. The network device 310 may be, for example, a primary base station, and the network device 320 may be, for example, a secondary base station. In this case, the network device 310 is a network device used when the terminal device 330 performs initial access, and is responsible for radio resource control (radio resource control, RRC) communication with the terminal device 330. The network device 320 may be added during RRC reconfiguration, and is configured to provide additional radio resources.

Optionally, one of the two network devices shown in FIG. 3, for example, the network device 310, may be referred to as a master node (master node, MN), and is responsible for exchanging a radio resource control message with the terminal device 330, and for interacting with a core network control plane entity. For example, the master node may be an MeNB or an MgNB. This is not limited in this application. The other of the two network devices shown in FIG. 3, for example, the network device 320, may be referred to as a secondary node (secondary node, SN). For example, the secondary node may be an SeNB or an SgNB. This is not limited in this application. A plurality of serving cells in the master node may form a master cell group (master cell group, MCG), including one primary cell (primary cell, PCell) and one or more optional secondary cells. A plurality of serving cells in the secondary node may form a secondary cell group (secondary cell group, SCG), including one primary secondary cell (primary secondary cell, PSCell, which may also be referred to as a special cell) and one or more optional SCells. The serving cell is a cell configured by a network for the terminal device to perform uplink and downlink transmission.

Similarly, the terminal device may alternatively have communication connections to a plurality of network devices at the same time and may receive and send data. In the plurality of network devices, there may be one network device responsible for exchanging a radio resource control message with the terminal device and responsible for interacting with a core network control plane entity. In this case, the network device may be referred to as an MN, and other network devices may be referred to as SNs.

Optionally, the network device 320 may alternatively be a master base station or a master node, and the network device 310 may alternatively be a secondary base station or a secondary node. This is not limited in this application.

It should be understood that FIG. 2 and FIG. 3 are merely examples rather than limitations. For example, FIG. 2 shows a case of a wireless connection between a terminal device and a network device, and FIG. 3 shows a case of a wireless connection between a terminal device and two network devices. However, this should not constitute any limitation on a scenario to which this application is applicable. The terminal device may further establish wireless links with more network devices.

A plurality of antennas may be configured for each communication device shown in FIG. 2 and FIG. 3, for example, the network device 210 or the terminal device 220 in FIG. 2, or the network device 310, the network device 320, or the terminal device 330 in FIG. 3. The plurality of antennas may include at least one transmit antenna configured to send a signal and at least one receive antenna configured to receive a signal. In addition, the communication device may further include a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving. Therefore, the network device and the terminal device may communicate with each other by using a multi-antenna technology.

A network device in the embodiments of this application may be a device configured to communicate with a terminal device, or any device having a wireless transceiver function or a chip that may be disposed in the device. The network device may be a base station. The base station may be configured to communicate with one or more terminal devices, or may be configured to communicate with one or more base stations (for example, a macro base station and a micro base station) that have some functions of the terminal device. The network device may be a device that is in an access network and that communicates with a wireless terminal by using one or more sectors over an air interface. The network device may further coordinate attribute management of the air interface. For example, the network device may be an evolved base station in LTE, or the network device may be a base station in a 5G system, an NR system, an M2M system, or another future evolved communication system. In addition, the network device may alternatively be an access point (access point, AP), a transmission node (transport point, TRP), a centralized unit (centralized unit, CU), a distributed unit (distributed unit, DU), or another network entity. In addition, some or all of the foregoing functions of the network entity may be included. This is not limited in the embodiments of this application. It should be noted that the network device in the embodiments of this application may be not only a base station device, but also a relay device, or another network element device having a function of a base station.

A terminal device in the embodiments of this application may be a device that provides voice and/or data connectivity for a user. The terminal device is a handheld device having a wireless connection function, or another processing device connected to a wireless modem. The terminal device may send and receive data with a network device (a serving cell) by using a radio access network (radio access network, RAN). The terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future evolved public land mobile network (public land mobile network, PLMN), or the like. This is not limited in the embodiments of this application.

It should be noted that the SMTC mentioned in this specification indicates a window that occurs periodically, and the measurement gap mentioned in this specification indicates a window that occurs periodically.

A window in a period may be denoted as an occasion (occasion). Unless otherwise specified, the SMTC mentioned in this specification indicates a window that occurs periodically, and is not only an occasion in a period. Unless otherwise specified, the measurement gap mentioned in this specification represents a window that occurs periodically, and is not only an occasion in a period.

It should be further noted that one or more SMTCs in this specification may be replaced with one or more sets of SMTCs, and one or more measurement gaps in this specification may be replaced with one or more sets of measurement gaps. For example, N SMTCs may be replaced with N sets of SMTCs, M SMTCs may be replaced with M sets of SMTCs, and M measurement gaps may be replaced with M sets of measurement gaps.

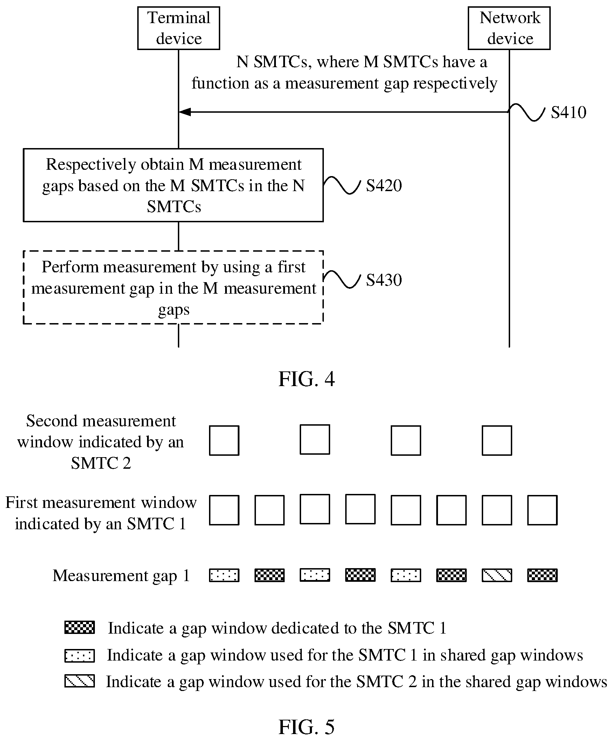

FIG. 4 is a schematic flowchart of a measurement method according to an embodiment of this application. The method includes the following steps:

S410: A network device sends N SMTCs to a terminal device, where M SMTCs in the N SMTCs have a function as a measurement gap, N and M are positive integers, and M is less than or equal to N.

That one SMTC has a function as a measurement gap indicates that one measurement gap that can cover a part or all of measurement windows indicated by the SMTC may be determined by the SMTC.

One SMTC (denoted as an SMTC 1) is used as an example. That the SMTC 1 has a function as a measurement gap indicates that one measurement gap (denoted as a measurement gap 1) may be determined by the SMTC 1.

Optionally, the measurement gap 1 may overlap all of measurement windows indicated by the SMTC 1.

In other words, a time domain position of the measurement gap 1 is the same as time domain positions of all of the measurement windows indicated by the SMTC 1. This means that in all of the measurement windows indicated by the SMTC 1, measurement can be performed by using the measurement gap.

Optionally, the measurement gap 1 may overlap a part of the measurement windows indicated by the SMTC 1.

In other words, the time domain position of the measurement gap 1 is the same as a time domain position of the part of the measurement windows indicated by the SMTC 1. This means that the measurement gap may be used for measurement in a part of the measurement windows indicated by the SMTC 1 (for example, a measurement window that overlaps the measurement gap 1), and the measurement window may be not used for measurement in the other part of the measurement windows (for example, a measurement window that does not overlap the measurement gap 1). If the measurement gap is not used for measurement in the other part of the measurement windows, it indicates that when performing measurement in the other part of the measurement windows, the terminal device may maintain data transmission with a serving cell.

It should be understood that the measurement gap 1 determined by the SMTC 1 overlaps at least a part of the measurement windows indicated by the SMTC 1.

In this embodiment of this application, that the SMTC has a function as a measurement gap, or the measurement gap is determined based on the SMTC, indicates that the measurement gap overlaps at least a part of the measurement windows indicated by the SMTC.

For example, the measurement gap 1 is further determined based on the SMTC 1. Optionally, the time domain position of the measurement gap 1 may further include a time domain position other than the time domain positions of all of the measurement windows indicated by the SMTC 1.

Optionally, M is less than N. In other words, the network device configures a plurality of SMTCs for the terminal device, where a part of the SMTCs have a function as a measurement gap respectively, and the other part of the SMTCs do not have a function as a measurement gap.

Optionally, M is equal to N. In other words, the network device configures one or more SMTCs for the terminal device, where all configured SMTCs have a function as a measurement gap respectively.

For example, a manner in which the network device sends the N SMTCs to the terminal device is as follows: The network device sends an RRC reconfiguration (RRCReconfiguration) message to the terminal device, where the RRC reconfiguration message includes a measurement configuration (measConfig), the measurement configuration includes one or more measurement objects (MOs), and each measurement object may include one or more SMTCs. For example, each measurement object may include one or two SMTCs. It should be understood that a total quantity of SMTCs in all of the measurement objects in the measurement configuration is N.

As an example, a part or all of SMTCs configured in the RRC reconfiguration message have a function as a measurement gap.

As another example, an SMTC of a part or all of measurement objects in the RRC reconfiguration message has a function as a measurement gap.

That an SMTC of one measurement object has a function as a measurement gap indicates that a part or all of SMTCs of the measurement object have a function as a measurement gap respectively. For example, that an SMTC of one measurement object has a function as a measurement gap indicates that one or more SMTCs of the measurement object have a measurement object function.

It is assumed that one measurement object includes one SMTC, and the SMTC of the measurement object has a function as a measurement gap. This indicates that the one SMTC of the measurement object has a function as a measurement gap.

It is assumed that one measurement object includes two SMTCs, and the SMTCs of the measurement object have a function as a measurement gap. This indicates that both the two SMTCs of the measurement object have a function as a measurement gap respectively, or only the first SMTC or the second SMTC of the measurement object has a function as a measurement gap.

It should be understood that before sending the N SMTCs to the terminal device, the network device generates the N SMTCs, where the M SMTCs in the N SMTCs have a function as a measurement gap respectively.

As described above, the SMTC may include the following configuration information: a period of a window, an offset (offset) of the window, and duration (duration) of the window. For example, for the offset of the window, timing of a special cell of the terminal device is used as a reference. The special cell may include a primary cell (primary cell, PCell) or a primary secondary cell (primary secondary cell, PSCell).

S420: The terminal device receives the N SMTCs, and respectively obtains M measurement gaps based on the M SMTCs in the N SMTCs.

In other words, the M measurement gaps are respectively determined based on the M SMTCs in the N SMTCs.

It is assumed that a measurement gap 1 in the M measurement gaps is determined based on the SMTC 1 in the M SMTCs, and the measurement gap 1 overlaps at least a part of the measurement windows indicated by the SMTC 1.

The following uses an example in which the measurement gap 1 is determined based on the SMTC 1 for description.

That the measurement gap 1 is determined based on the SMTC 1 means that a time domain position of the measurement gap 1 is determined based on the time domain positions of the measurement windows indicated by the SMTC 1. Alternatively, this may be represented as that an occasion of the measurement gap 1 is determined based on the measurement windows indicated by the SMTC 1.

That the measurement gap 1 overlaps at least a part of the measurement windows indicated by the SMTC 1 means that there is an intersect between the time domain position of the measurement gap 1 and the time domain positions of the measurement windows indicated by the SMTC 1.

Optionally, the measurement gap 1 overlaps all of the measurement windows indicated by the SMTC 1.

In this embodiment, the terminal device may directly determine the measurement gap 1 based on the SMTC 1. For example, a gap repetition periodicity (MGRP) of the measurement gap 1 is a period of the measurement window indicated by the SMTC 1, a gap offset (gapOffset) of the measurement gap 1 is an offset of the measurement window indicated by the SMTC 1, and a gap length (MGL) of the measurement gap 1 is duration of the measurement window indicated by the SMTC 1.

Optionally, the measurement gap 1 overlaps the part of the measurement windows indicated by the SMTC 1.

In other words, the time domain position of the measurement gap 1 is the time domain position of the part of the measurement windows indicated by the SMTC 1.

Alternatively, the measurement gap 1 may be expressed as: A proportion occupied by the measurement gap 1 in the measurement windows indicated by the SMTC 1 is less than 100%.

In other words, the part of the measurement windows indicated by the SMTC 1 have a function as a measurement gap.

For example, that a proportion occupied by the measurement gap 1 in the measurement windows indicated by the SMTC 1 is 50% indicates that one of every two measurement windows in the measurement windows indicated by the SMTC 1 has a function as a measurement gap.

As an example, the SMTC 1 indicates eight measurement windows, and a proportion occupied by the measurement gap 1 in the measurement windows indicated by the SMTC 1 is 50%. In this case, the second, fourth, sixth, and eighth measurement windows indicated by the SMTC 1 have a function as a measurement gap respectively, or the first, third, fifth, and seventh measurement gaps have a function as a measurement gap respectively. Whether the first measurement window or the second measurement window of the every two measurement windows indicated by the SMTC 1 has a function as a measurement gap may be configured by using signaling or specified in a protocol, or may be implemented by the terminal device.

Each measurement window indicated by the SMTC may be referred to as an occasion (occasion). The foregoing description that "a proportion occupied by the measurement gap 1 in the measurement windows indicated by the SMTC 1 is 50%" may also be expressed as "a proportion of an occasion occupied by the measurement gap 1 in occasions indicated by the SMTC 1 is 50%". This indicates that one of every two occasions indicated by the SMTC 1 has a function as a measurement gap.

In this embodiment, the terminal device may determine the measurement gap 1 based on the SMTC 1 and the proportion occupied by the measurement gap 1 in the SMTC 1. For example, the gap repetition periodicity (MGRP) of the measurement gap 1 is two or more times the period of the measurement windows indicated by the SMTC 1, the gap offset (gapOffset) of the measurement gap 1 is the offset of the measurement windows indicated by the SMTC 1, and the gap length (MGL) of the measurement gap 1 is the duration of the measurement windows indicated by the SMTC 1.

Compared with an SMTC in the current technology, the SMTC in this application may have a function as a measurement gap.

In this application, the measurement gap is determined by the SMTC, so that it can be ensured that the measurement gap can cover the measurement window indicated by the SMTC. Further, it can be ensured to some extent that the measurement gap can cover a measurement window of a measurement task requiring the measurement gap.

In addition, because the measurement gap may be determined by the SMTC, the network device may not need to deliver additional configuration information of the measurement gap. This reduces signaling.

Further, because the measurement gap may be determined by the SMTC, the time domain position of the measurement gap is a subset of the time domain position of the measurement window indicated by the SMTC. In this way, on a premise that the measurement gap covers the measurement window indicated by the SMTC, time for data transmission, between the terminal device and the serving cell, that is interrupted in the measurement gap can be reduced.

It should be noted that the SMTC in this embodiment of this application indicates a window that is configured by the network device for the terminal device for performing SSB-based measurement. If another name is used to describe the window that is configured by the network device for the terminal device and that is used to perform measurement based on the SSB in future technology evolution, the "SMTC" in this embodiment of this application may be replaced with a corresponding name.

Optionally, in some embodiments, M is an integer greater than or equal to 2. Because M is less than or equal to N, it is equivalent that N is also an integer greater than or equal to 2.

It should be understood that, in this embodiment, that a plurality of SMTCs having a function as a measurement gap may be implemented is equivalent to that a plurality of measurement gaps are configured. On one hand, the plurality of measurement gaps can cover the plurality of SMTCs. On the other hand, the plurality of measurement gaps may be determined by using the plurality of SMTCs, and the network device does not need to deliver configuration information of the plurality of measurement gaps. Therefore, signaling can be saved.

In this application, the M SMTCs may be configured by using signaling to have a function as a measurement gap respectively, or the M SMTCs may be specified in a protocol to have a function as a measurement gap respectively.

Optionally, in the embodiment shown in FIG. 4, the method further includes: The network device sends first indication information to the terminal device, to indicate that the M SMTCs in the N SMTCs have a function as a measurement gap respectively.

Optionally, the first indication information is used to directly indicate that the M SMTCs in the N SMTCs have a function as a measurement gap respectively.

Correspondingly, the terminal device may learn, directly based on the first indication information, which M SMTCs in the N SMTCs have a function as a measurement gap respectively.

Optionally, the first indication information is used to indirectly indicate that the M SMTCs in the N SMTCs have a function as a measurement gap respectively, and the first indication information and a protocol stipulation may be used together to determine which M SMTCs in the N SMTCs have a function as a measurement gap respectively.

Correspondingly, the terminal device learns, based on the first indication information and according to the protocol stipulation, which M SMTCs in the N SMTCs have a function as a measurement gap respectively.

As an example, a manner in which the network device delivers the N SMTCs to the terminal device is as follows: The network device sends an RRC reconfiguration message to the terminal device, where the RRC reconfiguration message includes a measurement configuration, the measurement configuration includes one or more measurement objects, and each measurement object includes one or more SMTCs. It should be understood that a total quantity of SMTCs in all of the measurement objects in the measurement configuration is N.

Optionally, in an implementation, the first indication information indicates that a part or all of the SMTCs in the measurement configuration have a function as a measurement gap.

The first indication information may be jointly delivered with the N SMTCs. For example, in this implementation, the first indication information may be carried in the measurement configuration.

Alternatively, the first indication information may be separately delivered from the N SMTCs.

Optionally, in another implementation, the first indication information indicates that an SMTC of a part or all of the measurement objects in the RRC reconfiguration message has a function as a measurement gap.

That an SMTC of one measurement object has a function as a measurement gap indicates that a part or all of SMTCs of the measurement object have a function as a measurement gap respectively.

It is assumed that one measurement object includes two SMTCs. That the SMTCs of the measurement object have a function as a measurement gap indicates that both the two SMTCs of the measurement object have a function as a measurement gap respectively, or the first SMTC or the second SMTC of the measurement object has a function as a measurement gap.

The first indication information may be jointly delivered with the N SMTCs.

Optionally, in this implementation, the first indication information may be carried in the measurement object, and the first indication information is used to indicate that the SMTC of the measurement object in which the first indication information is located has a function as a measurement gap.

For example, that all of the measurement objects in the measurement configuration carry the first indication information indicates that an SMTC of each measurement object has a function as a measurement gap.

For another example, in the measurement configuration, that a part of measurement objects carry the first indication information, and the other part of the measurement objects do not carry the first indication information indicates that an SMTC of the part of the measurement objects that carry the first indication information has the function as a measurement gap, and an SMTC of the other part of the measurement objects that do not carry the first indication information does not have the function as a as a measurement gap.

Optionally, in this implementation, the first indication information may be carried in the measurement configuration, and the first indication information is used to indicate that SMTCs of the part or all of the measurement objects in the measurement configuration have a function as a measurement gap respectively.

Alternatively, the first indication information may be separately delivered from the N SMTCs.

Optionally, in the foregoing embodiment related to the first indication information, the first indication information may be a value of one piece of identification information.

For example, the identification information is 1-bit information. When the value of the identification information is "1", it indicates the first indication information, that is, it indicates that a corresponding SMTC has a function as a measurement gap. When the value of the identification information is "0", it indicates that a corresponding SMTC does not have a function as a measurement gap.

Optionally, in this application, it may be further specified in a protocol that the M SMTCs in the N SMTCs have a function as a measurement gap respectively. Correspondingly, according to the protocol stipulation, the terminal device respectively obtains the M measurement gaps based on the M SMTCs in the N SMTCs.

For example, it is specified in the protocol that all SMTCs configured by the network device have a function as a measurement gap respectively.

For another example, a manner in which the network device delivers the N SMTCs to the terminal device is as follows: The network device sends an RRC reconfiguration message to the terminal device, where the RRC reconfiguration message includes a measurement configuration, the measurement configuration includes one or more measurement objects, and each measurement object includes one or more SMTCs. It is specified in the protocol that all SMTCs configured in the RRC reconfiguration message have a function as a measurement gap respectively. Alternatively, it is specified in the protocol that SMTCs of a part or all of measurement objects configured in the RRC reconfiguration message have a function as a measurement gap respectively, and that an SMTC of one measurement object has a function as a measurement gap indicates that a part or all of the SMTCs of the measurement object have a function as a measurement gap respectively.

Optionally, in the embodiment shown in FIG. 4, the method further includes: The network device sends second indication information to the terminal device, where the second indication information is used to indicate proportions respectively occupied by the M measurement gaps in the M SMTCs. Correspondingly, in step S420, the terminal device determines the M measurement gaps based on the second indication information and the M SMTCs.

For example, the second indication information may have a plurality of values, and it is specified in the protocol that values of the second indication information represent the proportions. As an example, the second indication information is one piece of 2-bit identification information, and the second indication information has four values "00", "01", "10", and "11". It is specified in the protocol that when the value of the second indication information is "00", it indicates that the proportion is 25%; when the value is "01", it indicates that the proportion is 50%; when the value is "10", it indicates that the proportion is 75%; and when the value is "11", it indicates that the proportion is 100%.

For example, the network device sends the first indication information and the second indication information to the terminal device, and the terminal device determines the M measurement gaps based on the first indication information, the second indication information, and the M SMTCs in the N SMTCs.

Optionally, in the embodiment in which the first indication information and the second indication information are mentioned, the first indication information and the second indication information may be expressed by using a same piece of identification information. For example, the identification information is 3 bits, a value of the first bit represents the first indication information, and values of the second bit and the third bit represent the second indication information.

Optionally, the proportions respectively occupied by the M measurement gaps in the M SMTCs may also be specified in the protocol. Correspondingly, in step S420, the terminal device learns of, according to the protocol stipulation, the proportions respectively occupied by the M measurement gaps in the M SMTCs, and determines the M measurement gaps based on the proportions and the M SMTCs.

In this application, the measurement gap determined based on the SMTC may be exclusive or shared. Whether the measurement gap determined based on the SMTC is exclusive or shared (or may be shared or public) may be configured by using signaling, or may be specified in the protocol.

That the measurement gap is exclusive indicates that one measurement gap is dedicated to one SMTC.

That the measurement gap is shared indicates that one measurement gap may be used for a plurality of SMTCs, or one measurement gap may be shared for a plurality of SMTCs.

It should be noted that for a shared measurement gap, the measurement gap may be used for only one SMTC at a same moment or in a same period of time.

In other words, that the measurement gap is shared indicates that in a plurality of windows (referred to as gap windows below) periodically occurring in one measurement gap, different gap windows may be used for different SMTCs, and a same gap window is used for a same SMTC.

It should be understood that only when a gap window of one SMTC overlaps a window of one measurement gap, the measurement gap can be used for the SMTC. It may be understood that, for a shared measurement gap, in a plurality of gap windows periodically occurring in the measurement gap, only those gap windows that simultaneously overlap with windows of a plurality of SMTCs are considered to be shared with the plurality of SMTCs. However, those gap windows that overlap a window of only one SMTC (denoted as an SMTC 1) are dedicated to the SMTC 1.

Optionally, that the measurement gap is shared indicates that a plurality of SMTCs may share (share) one measurement gap in proportion.

As an example, it is assumed that one measurement gap includes six gap windows, and all of the six gap windows overlap windows of the SMTC 1 and an SMTC 2. If the measurement gap is shared with the SMTC 1 and the SMTC 2, the first, third, and fifth gap windows are used for the SMTC 1, and the second, fourth, and sixth gap windows are used for the SMTC 2. In this example, it may be considered that the six gap windows of the measurement gap are shared with the SMTC 1 and the SMTC 2, and the SMTC 1 and the SMTC 2 share the measurement gap according to a proportion of 50%.

As another example, it is assumed that one measurement gap includes six gap windows, the first, second, fourth, and fifth gap windows all overlap windows of the SMTC 1 and the SMTC 2, and the third and sixth gap windows overlap only the window of the SMTC 1. If the measurement gap is shared with the SMTC 1 and the SMTC 2, the first gap window and the fourth gap window are used for the SMTC 1, the second gap window and the fifth gap window are used for the SMTC 2, and the third gap window and the sixth gap window are used for the SMTC 1. In this example, it may be considered that the first, second, fourth, and fifth gap windows of the measurement gap are shared with the SMTC 1 and the SMTC 2. The SMTC 1 and the SMTC 2 share the measurement gap according to a proportion of 50%, and the third and sixth gap windows of the measurement gap are not shared but are dedicated to the SMTC 1.

In conclusion, the shared measurement gap mentioned in this specification includes a case in which all gap windows of one measurement gap are shared, and also includes a case in which a part of gap windows of one measurement gap are shared.

Sharing of the measurement gap may be implemented by using a measurement gap sharing (gap sharing) mechanism. Sharing of the measurement gap refers to sharing of the measurement gap among various measurement types. A purpose of the measurement gap sharing mechanism is to determine a proportion, of the measurement gap, that is obtained through division by various types of measurement.

For example, for sharing of intra-frequency measurement and inter-frequency measurement that require a measurement gap, by using a signaling configuration of the network device or according to a protocol, a proportion of the measurement gap shared with the intra-frequency measurement is 25% (which is equivalent to that a proportion of the measurement gap shared with the inter-frequency measurement is 75%). This indicates that one of every four measurement gap periods is used for the intra-frequency measurement, and three measurement gap periods are used for the inter-frequency measurement.

In the embodiment shown in FIG. 4, M is less than N, and the method further includes: The network device sends third indication information to the terminal device, where the third indication information is used to indicate that L measurement gaps in the M measurement gaps are shared, and L is a positive integer less than or equal to M.

That one measurement gap is shared indicates that the measurement gap can be applied not only to an SMTC of a current measurement object (which may also be referred to as a current frequency), but also to an SMTC of another measurement object (which may also be referred to as another frequency). The current measurement object indicates the measurement object to which the SMTC corresponding to the measurement gap belongs.

For example, one SMTC (denoted as an SMTC 1) in the M SMTCs is used. Assuming that a measurement gap 1 determined by the SMTC 1 is shared, it indicates that the measurement gap 1 may be applied to the SMTC 1 and may be further applied to an SMTC of another measurement object except a measurement object to which the SMTC 1 belongs.

In this embodiment, the method further includes: The network device sends fourth indication information to the terminal device, where the fourth indication information is used to indicate sharing information of each of the L measurement gaps, and the sharing information of each measurement gap includes information about at least one SMTC in the N SMTCs except the M SMTCs.

Sharing information of one measurement gap is used to indicate an SMTC with which the measurement gap is shared.

For example, the sharing information of each measurement gap includes the information about at least one SMTC in the N SMTCs except the M SMTCs.

For example, one SMTC (denoted as an SMTC 1) in the M SMTCs is used. Assuming that a measurement gap 1 determined by the SMTC 1 is shared, sharing information of the measurement gap 1 includes information about an SMTC 2, and the SMTC 2 is an SMTC in the N SMTCs except the M SMTCs, it indicates that the measurement gap 1 is shared with the SMTC 1 and the SMTC 2.

Optionally, sharing information of one measurement gap may further include a sharing coefficient of the measurement gap. A sharing coefficient of one measurement gap indicates a proportion of the measurement gap shared with each of a plurality of SMTCs.

For example, the network device sends the SMTC 1 and the SMTC 2 to the terminal device, where the SMTC 1 has a function as a measurement gap. The network device further sends the third indication information to the terminal device, to indicate that the measurement gap 1 determined by the SMTC 1 is shared. The network device further sends the fourth indication information to the terminal device, to indicate the sharing information of the measurement gap 1, and the sharing information of the measurement gap 1 includes the information about the SMTC 2. That is, the measurement gap 1 determined by the SMTC 1 is shared with the SMTC 1 and the SMTC 2. The sharing information of the measurement gap 1 further includes a sharing coefficient of the measurement gap 1, namely, a proportion of the measurement gap 1 shared with the SMTC 1 and the SMTC 2.

For example, sharing of the measurement gap is described below in FIG. 5.

As shown in FIG. 5, a period of a first measurement window indicated by the SMTC 1 is 80 ms, and an offset (offset) is 0 ms; and a period of a second measurement window indicated by the SMTC 2 is 160 ms, and an offset (offset) is 0 ms.

It is assumed that the SMTC 1 has a function as a measurement gap, and the measurement gap 1 determined by the SMTC 1 completely covers the first measurement window, that is, a window (denoted as a gap window) of the measurement gap 1 completely overlaps a measurement window of the SMTC 1. It is assumed that the measurement gap 1 is shared with the SMTC 1 and the SMTC 2, and that a sharing proportion of the first measurement window to the measurement gap 1 is 75%, and a sharing proportion of the second measurement window to the measurement gap 1 is 25%.

It can be learned from FIG. 5 that there are two periods of the measurement gap 1 in each 160 ms. The first measurement window collides with the second measurement window in the first period (the period of the measurement gap 1). In the second period (the period of the measurement gap 1), only the first measurement window is available. In each 160 ms, the gap window in the first period is shared with the first measurement window and the second measurement window according to a proportion of 3:1. In other words, in the first 160 ms, the second 160 ms, and the third 160 ms, the gap window in the first period is used by the first measurement window, and in the fourth 160 ms, the gap window in the first period is used by the second measurement window. In each 160 ms, the gap window in the second period is dedicated to the first measurement window.

It may be understood that the terminal device may learn, based on the third indication information, that the L measurement gaps in the M measurement gaps are shared, and may learn, based on the fourth indication information, specific SMTCs with which each of the L measurement gaps is shared, or SMTCs, of specific measurement objects, with which each of the L measurement gaps is shared.

It can be learned from the foregoing descriptions that, in addition to configuring, for the terminal device, that the measurement gap determined by the SMTC is shared, the network device may further configure a sharing frequency and a sharing coefficient of the measurement gap.

As an example, the SMTC 1 has a function as a measurement gap, the measurement gap determined by the SMTC 1 is denoted as the measurement gap 1, and a frequency to which the SMTC 1 belongs is denoted as a frequency 1 (corresponding to a measurement object 1 (MO1)). The network device configures a sharing frequency of the measurement gap 1 for the terminal device, and the sharing frequency includes the frequency 1 and a frequency 2 (corresponding to a measurement object 2 (MO2)). This indicates that the measurement gap 1 may be used for the SMTC 1 of the frequency 1, and may also be used for an SMTC of the frequency 2 (denoted as an SMTC 2). The network device configures a sharing coefficient of the measurement gap 1 for the terminal device, and the sharing coefficient includes a sharing coefficient of the frequency 1 and a sharing coefficient of the frequency 2. Assuming that the sharing coefficient of the frequency 1 is 75% (that is, the sharing coefficient of the frequency 2 is 25%), the terminal device performs, in three of every four periods of the measurement gap 1, measurement on a measurement window indicated by the SMTC 1 of the frequency 1, and performs, in the other one period, measurement on a measurement window indicated by the SMTC 2 of the frequency 2.

It is described above that the network device notifies, by using the signaling configuration, the terminal device that the L measurement gaps in the M measurement gaps determined by the M SMTCs are shared. It should be understood that the L measurement gaps in the M measurement gaps may alternatively be specified in the protocol to be shared. For example, it is specified in the protocol that each of the M measurement gaps is shared.

Optionally, in the embodiment shown in FIG. 4, the method further includes: The network device sends fifth indication information to the terminal device, where the fifth indication information is used to indicate measurement gap types of the M measurement gaps, and the measurement gap types include any one or more of the following: a user equipment-level measurement gap (per-UE gap), a first frequency range FR1-level measurement gap (per-FR1 gap), and a second frequency range FR2-level measurement gap (per-FR2 gap).

It should be understood that the measurement gap types of the M measurement gaps may also be specified in the protocol.

It should be noted that, in the foregoing descriptions, a manner in which the network device delivers the N SMTCs to the terminal device is as follows: The network device sends an RRC reconfiguration message to the terminal device, where the RRC reconfiguration message includes a measurement configuration, the measurement configuration includes one or more measurement objects, and each measurement object includes one or more SMTCs. However, this application is not limited thereto. If a technology evolves in the future, and it is proposed that the network device sends the SMTC to the terminal device in a new manner, the network device may deliver the N SMTCs to the terminal device in a corresponding new manner.

In this application, the terminal device may obtain the M measurement gaps based on the M SMTCs in the N SMTCs sent by the network device. When a measurement task indicated by any one of the M SMTCs requires a measurement gap, the terminal device may directly perform measurement in a corresponding measurement window by using the measurement gap, to ensure measurement of the measurement task that requires the measurement gap.

In addition, the network device configures, for the terminal device, the SMTC that has a function as a measurement gap, so that the terminal device may determine the measurement gap based on the SMTC, and signaling for configuring the measurement gap may be omitted.

Optionally, in some embodiments, the measurement gap determined by the SMTC is validated by default.

For example, when the terminal device performs measurement tasks indicated by the M SMTCs, the M measurement gaps are validated by default. In other words, when performing the measurement tasks indicated by the M SMTCs, the terminal device may interrupt data transmission with the network device (a serving cell).

Optionally, in some embodiments, the measurement gap determined by the SMTC is validated based on a measurement requirement.

For example, the M measurement gaps determined by the M SMTCs are validated only when a measurement task requires a measurement gap.

Optionally, in the embodiment shown in FIG. 4, when measurement indicated by a first SMTC in the M SMTCs requires a measurement gap, the method further includes step S430.

S430: The terminal device performs measurement by using a first measurement gap in the M measurement gaps, where the first measurement gap is obtained by the first SMTC.

For example, if a measurement task indicated by the first SMTC requires a measurement gap, the terminal device may validate the first measurement gap, that is, the terminal device may interrupt data transmission with the serving cell when performing the measurement task indicated by the first SMTC. If the measurement task indicated by the first SMTC does not require a measurement gap, the terminal device may not validate the first measurement gap, that is, the terminal device may further maintain data transmission with the serving cell when performing the measurement task indicated by the first SMTC.

Optionally, when measurement indicated by the first SMTC in the M SMTCs requires a measurement gap, the network device (the serving cell) may stop data transmission with the terminal device in a first measurement gap in the M measurement gaps, where the first measurement gap is obtained by the first SMTC.

Optionally, in an occasion of the M measurement gaps, the network device may also maintain data transmission with the terminal device. Whether the terminal device maintains data transmission with the network device (the serving cell) in the occasion of the M measurement gaps may be independently determined by the terminal device.

In this application, the terminal device may determine, based on a measurement requirement, whether to validate the measurement gap determined by the SMTC, so that time for communication, between the terminal device and the network device, that is interrupted in the measurement gap can be effectively reduced.

Optionally, in step S420, when the measurement tasks indicated by the M SMTCs require measurement gaps, the terminal device respectively determines the M measurement gaps based on the M SMTCs.

Based on the foregoing descriptions, in this application, the measurement gap is determined by the SMTC, so that it can be ensured that the measurement task indicated by the SMTC has a measurement gap configuration. In other words, it can be ensured that the measurement gap covers the measurement window indicated by the SMTC. In addition, because the measurement gap may be determined by the SMTC, the network device may not need to deliver additional configuration information of the measurement gap. This reduces signaling.

It should be noted that, whether measurement indicated by one SMTC requires a measurement gap is known to the terminal device and the network device.

As an example, in a plurality of BWP (multiple BWP) scenarios, when an active BWP (active BWP) includes a to-be-measured reference signal, measurement of the terminal device does not require a measurement gap. For SSB-based intra-frequency measurement, no measurement gap is required when the active BWP is an initial BWP (initial BWP). In other cases, the measurement gap is required for measurement of the terminal device.

When BWP switching is controlled by downlink control information (downlink control information, DCI), the network device has learned whether measurement of the terminal device requires the measurement gap when sending the DCI to the terminal device, and when the terminal device receives the DCI, the network device may also learn whether measurement of the terminal device requires the measurement gap. For example, when the current active BWP does not include the to-be-measured reference signal, and the active BWP is not the initial BWP, the terminal device may suspend data transmission between the terminal device and the serving cell, and perform measurement in the occasion of the measurement gap. For another example, when the current active BWP includes the to-be-measured reference signal, the terminal device performs data transmission with the serving cell.

It should be understood that DCI signaling is faster than RRC signaling used for configuring the measurement gap in a conventional technology. Therefore, when BWP switching is controlled by the DCI, the terminal device may be enabled to perform measurement by using the measurement gap in time. This improves measurement efficiency.

Optionally, the measurement gaps configured by the network device for the terminal device may include the measurement gap determined by the SMTC, and may further include a measurement gap determined based on measurement gap configuration information. In other words, the measurement gap determined by the SMTC may coexist with the measurement gap determined based on the measurement gap configuration information. For example, measurement gaps that are actually validated may be a union of the measurement gap determined by the SMTC and the measurement gap determined based on the measurement gap configuration information.

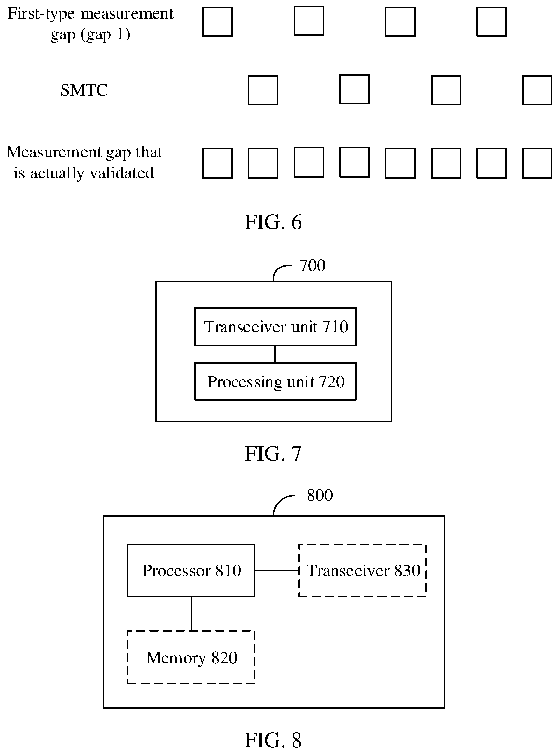

For example, as shown in FIG. 6, the network device configures a first-type measurement gap (a gap 1 shown in FIG. 6) whose period is 40 ms for the terminal device by using the measurement gap configuration information, the network device further configures an SMTC whose period is 40 ms for the terminal device, and the SMTC has a function as a measurement gap. A measurement gap determined by the SMTC is denoted as a second-type measurement gap. The measurement gaps that are actually validated include the first-type measurement gap and the second-type measurement gap. For example, measurement gap occasions (gap occasions) that are actually validated=a gap 1 occasion+an SMTC occasion.

Based on the foregoing descriptions, in this application, the measurement gap is determined by the SMTC, so that it can be ensured that the measurement task indicated by the SMTC has the measurement gap configuration. In other words, it can be ensured that the measurement gap covers the measurement window indicated by the SMTC. In addition, because the measurement gap may be determined by the SMTC, the network device may not need to deliver additional configuration information of the measurement gap. This reduces signaling.

Another embodiment of this application provides a measurement method. The method includes: A network device sends configuration information of a plurality of measurement gaps to a terminal device. The terminal device performs measurement by alternately using a plurality of measurement gaps.

For example, the configuration information of the plurality of measurement gaps may be configured by using a same piece of RRC reconfiguration (RRCReconfiguration) signaling, or may be configured by using a plurality of pieces of RRC reconfiguration signaling.

For example, the configuration information of the plurality of measurement gaps and measurement tasks may be configured by using a same piece of RRC reconfiguration signaling. Alternatively, the measurement tasks may be configured, and the plurality of measurement gaps are then configured. Alternatively, the plurality of measurement gaps may be configured, and the measurement tasks are then configured. Alternatively, the measurement tasks and/or the plurality of measurement gaps may be updated after the measurement tasks and/or the plurality of measurement gaps are configured.

In this embodiment, the plurality of measurement gaps are alternately validated. Valid time of each measurement gap may be configured in a network or specified in a protocol, so that the terminal device performs measurement by alternately using the plurality of measurement gaps.

Optionally, in this embodiment, the plurality of measurement gaps may correspond to one or more measurement tasks. During actual application, allocation may be performed based on a specific requirement.

Optionally, in this embodiment, the method may further include: The network device sends indication information to the terminal device, to indicate to alternately use the plurality of measurement gaps.

For example, the indication information includes valid time of each of the plurality of measurement gaps, and the valid time of each measurement gap does not overlap. Correspondingly, the terminal device performs measurement by alternately using the plurality of measurement gaps based on the valid time of each measurement gap.

In the following examples, the measurement gap (measurement gap) is referred to as a gap for short.

As an example, a period of a measurement gap 1 (gap 1) is 40 ms, and an offset (offset) is 0 ms; and a period of a measurement gap 2 (gap 2) is 40 ms, and an offset is 20 ms. Only the gap 1 is validated in the first period (the period of the gap 1), only the gap 2 is validated in the second period (the period of the gap 2), only the gap 1 is validated in the third period (the period of the gap 1), only the gap 2 is validated in the fourth period (the period of the gap 2), and so on.

As another example, valid time of each set of gaps may be defined when gaps alternate, and the valid time may be represented by x ms (or in another time unit) or x periods.

The valid time of each set of gaps may be the same. For example, same valid time may be uniformly configured for a plurality of sets of gaps.

It is assumed that a period of a gap 1 is 40 ms, and an offset is 0 ms; and a period of a gap 2 is 80 ms, and an offset is 20 ms. Same valid time configured for all gaps is 80 ms. Only the gap 1 is validated in the first 80 ms, only the gap 2 is validated in the second 80 ms, only the gap 1 is validated in the third 80 ms, only the gap 2 is validated in the fourth 80 ms, and so on.

The valid time of each set of gaps may be different. For example, the valid time may be separately configured for each set of gaps.

It is assumed that a period of a gap 1 is 40 ms, and an offset is 0 ms; and a period of a gap 2 is 80 ms, and an offset is 20 ms. For example, if valid time configured for the gap 1 is 80 ms, and valid time configured for the gap 2 is 160 ms, after the gap 1 is validated for two periods, the gap 2 is switched to be validated for two periods; after the gap 2 is validated for two periods, the gap 1 is switched to be validated for two periods; and so on. For another example, if valid time configured for the gap 1 is 40 ms, and valid time configured for the gap 2 is 160 ms, after the gap 1 is validated for one period, the gap 2 is switched to be validated for two periods; after the gap 2 is validated for two periods, the gap 1 is switched to be validated for one period; and so on.

It should be understood that, in this embodiment, the plurality of sets of measurement gaps are configured, so that measurement of a measurement task that requires a measurement gap can be ensured. In addition, the terminal device alternately uses the plurality of sets of measurement gaps, so that time for data transmission, between the terminal device and the network device, that is interrupted in the measurement gap can be reduced, and complexity caused by simultaneous activation/deactivation of the plurality of sets of measurement gaps can be reduced.

Still another embodiment of this application provides a measurement method. The method includes: A network device sends configuration information of a plurality of measurement gaps to a terminal device, where the plurality of measurement gaps have an overlapping part. The terminal device performs measurement based on the configuration information of one of the plurality of measurement gaps.

For example, the configuration information of the plurality of measurement gaps may be configured by using a same piece of RRC reconfiguration (RRCReconfiguration) signaling, or may be configured by using a plurality of pieces of RRC reconfiguration signaling.

For example, the configuration information of the plurality of measurement gaps and measurement tasks may be configured by using a same piece of RRC reconfiguration signaling. Alternatively, the measurement tasks may be configured, and the plurality of measurement gaps are then configured. Alternatively, the plurality of measurement gaps are configured, and the measurement tasks are then configured. Alternatively, the measurement tasks and/or the plurality of measurement gaps may be updated after the measurement tasks and/or the plurality of measurement gaps are configured.

Optionally, in this embodiment, the method further includes: The network device sends indication information to the terminal device, to indicate priorities of the plurality of measurement gaps. Correspondingly, the terminal device performs measurement based on configuration information of one measurement gap with a relatively high priority in the plurality of measurement gaps.

For example, the plurality of measurement gaps may be associated with different measurement objects (MOs).

In the following examples, the measurement gap (measurement gap) is referred to as a gap for short.

As an example, the network device configures a gap 1 and a gap 2 for the terminal device, the gap 1 is associated with an MO 1 and an MO 2, and the gap 2 is associated with an MO 3. A priority of gap 1 is 1, a priority of gap 2 is 2, and it is assumed that the priority 1 is higher than the priority 2. Alternatively, only one high-priority indication is configured for the preferred gap 1, and no indication is configured for the gap 2. When the gap 1 and the gap 2 overlap (overlap), the terminal device preferably measures a measurement task corresponding to the gap 1, that is, preferably measures a measurement task corresponding to the MO 1 and the MO 2.

In this embodiment, a plurality of sets of measurement gaps are configured, so that measurement of a measurement task that requires a measurement gap can be ensured. In addition, when the plurality of sets of measurement gaps overlap, one set of measurement gaps are simultaneously used for measurement, for example, one set of measurement gaps with a relatively high priority are preferably used for measurement, so that time for data transmission, between the terminal device and the network device, that is interrupted in the measurement gap can be reduced.

Optionally, in the embodiment in which the network device configures the plurality of measurement gaps for the terminal device, the configuration information of the plurality of measurement gaps configured by the network device for the terminal device corresponds to a plurality of measurement objects (frequencies). For example, that one measurement gap corresponds to a measurement object 1 indicates that the terminal device may perform, by using the measurement gap, a measurement task configured for the measurement object 1.

For example, the network device sends configuration information of X measurement gaps to the terminal device, where the X measurement gaps correspond to Y measurement objects.

For example, each of the X measurement gaps corresponds to one measurement object. Measurement objects corresponding to different measurement gaps may be different, that is, Y is equal to X. Alternatively, measurement objects corresponding to different measurement gaps may be the same, that is, Y may be less than X.

For another example, each of the X measurement gaps corresponds to at least one measurement object, and at least one measurement gap may correspond to a plurality of measurement objects. Measurement objects corresponding to different measurement gaps are different, that is, Y is greater than X. Alternatively, measurement objects corresponding to different measurement gaps may be the same or different, that is, Y may be less than or equal to X.

A plurality of sets of measurement gaps corresponding to a plurality of measurement objects (frequencies) are configured, so that measurement on different frequencies can be satisfied.

It should be further understood that various numbers such as first and second in this specification are used for differentiation only for ease of description, and are not used to limit the scope of the embodiments of this application.

The embodiments described in this specification may be independent solutions, or may be combined based on internal logic. These solutions all fall within the protection scope of this application.

It may be understood that the methods and operations implemented by the terminal device in the foregoing method embodiments may also be implemented by a component (for example, a chip or a circuit) that may be used for the terminal device. The methods and operations implemented by the network device in the foregoing method embodiments may also be implemented by a component (for example, a chip or a circuit) that may be used for the network device.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in the embodiments of this application from a perspective of interaction between network elements. It may be understood that, to implement the foregoing functions, each network element, such as a transmit end device or a receive end device, includes a corresponding hardware structure and/or software module for performing each function. A person skilled in the art should be aware that with reference to the examples described in the embodiments disclosed in this specification, units and algorithm steps may be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the protection scope of this application.

In the embodiments of this application, a transmit end device or a receive end device may be divided into functional modules based on the foregoing method examples. For example, the transmit end device or the receive end device may be divided into functional modules corresponding to functions, or two or more functions may be integrated into one processing module. The integrated module may be implemented in a form of hardware, or may be implemented in a form of a software functional module. It should be noted that the module division in the embodiments of this application is an example, and is merely logical function division. During actual implementation, there may be another feasible division manner. An example in which each functional module is obtained through division based on a corresponding function is used below for description.

FIG. 7 is a schematic block diagram of a communication apparatus 700 according to an embodiment of this application. The communication apparatus 700 includes a transceiver unit 710 and a processing unit 720. The transceiver unit 710 may communicate with the outside, and the processing unit 710 is configured to process data. The transceiver unit 710 may also be referred to as a communication interface or a communication unit.

Optionally, the communication apparatus 700 may further include a storage unit. The storage unit may be configured to store instructions or data. The processing unit 720 may read the instructions or the data in the storage unit.

The communication apparatus 700 may be configured to perform an action performed by the terminal device in the foregoing method embodiments, the transceiver unit 710 is configured to perform a transceiver-related operation performed by the terminal device in the foregoing method embodiments, and the processing unit 720 is configured to perform a processing-related operation performed by the terminal device in the foregoing method embodiments. In this case, the communication apparatus 700 may be a terminal device, or may be a part or a component that may be configured in the terminal device.

Alternatively, the communication apparatus 700 may be configured to perform an action performed by the network device in the foregoing method embodiments, the transceiver unit 710 is configured to perform a transceiver-related operation performed by the network device in the foregoing method embodiments, and the processing unit 720 is configured to perform a processing-related operation performed by the network device in the foregoing method embodiments. In this case, the communication apparatus 700 may be a network device, or may be a part or a component that may be configured in the network device.

In a design, the communication apparatus 700 is configured to perform an action performed by the terminal device in the foregoing method embodiment. The transceiver unit 710 is configured to receive N SMTCs. The processing unit 720 is configured to respectively obtain M measurement gaps based on M SMTCs in the N SMTCs, where N and M are positive integers, and M is less than or equal to N.

Optionally, the transceiver unit 710 is further configured to receive first indication information, where the first indication information is used to indicate that the M SMTCs have a function as a measurement gap respectively.

Optionally, the transceiver unit 710 is further configured to receive second indication information, where the second indication information is used to indicate proportions respectively occupied by the M measurement gaps in the M SMTCs. The processing unit 720 is configured to determine M measurement gaps based on the second indication information and the M SMTCs.

M is less than N, and the transceiver unit 710 is further configured to receive third indication information, where the third indication information is used to indicate that L measurement gaps in the M measurement gaps are shared, and L is a positive integer less than or equal to M.

The transceiver unit 710 is further configured to receive fourth indication information, where the fourth indication information is used to indicate sharing information of each of the L measurement gaps, and the sharing information of each measurement gap includes information about at least one SMTC in the N SMTCs except the M SMTCs.

Optionally, the transceiver unit 710 is further configured to receive fifth indication information, where the fifth indication information is used to indicate measurement gap types of the M measurement gaps, and the measurement gap type includes any one or more of the following: a user equipment-level measurement gap, a first frequency range (FR1)-level measurement gap, and a second frequency range (FR2)-level measurement gap.

Optionally, when measurement indicated by a first SMTC in the M SMTCs requires a measurement gap, the processing unit 720 is further configured to perform measurement by using a first measurement gap in the M measurement gaps, where the first measurement gap is obtained by the first SMTC.

In another design, the communication apparatus 700 is configured to perform an action performed by the network device in the foregoing method embodiment. The processing unit 720 is configured to generate N SMTCs, where M SMTCs in the N SMTCs have a function as a measurement gap. The transceiver unit 710 is configured to send the N SMTCs to a terminal device, so that the terminal device respectively obtains M measurement gaps based on the M SMTCs.

Optionally, the transceiver unit 710 is further configured to send first indication information to the terminal device, where the first indication information is used to indicate that the M SMTCs have a function as a measurement gap respectively.

Optionally, the transceiver unit 710 is further configured to send second indication information to the terminal device, where the second indication information is used to indicate proportions respectively occupied by the M measurement gaps in the M SMTCs.

The transceiver unit 710 is further configured to send third indication information to the terminal device, where the third indication information is used to indicate that L measurement gaps in the M measurement gaps are shared, and L is a positive integer less than or equal to M.

The transceiver unit 710 is further configured to send fourth indication information to the terminal device, where the fourth indication information is used to indicate sharing information of each of the L measurement gaps, and the sharing information of each measurement gap includes information about at least one SMTC in the N SMTCs except the M SMTCs.

Optionally, the transceiver unit 710 is further configured to send fifth indication information to the terminal device, where the fifth indication information is used to indicate measurement gap types of the M measurement gaps, and the measurement gap type includes any one or more of the following: a user equipment-level measurement gap, a first frequency range (FR1)-level measurement gap, and a second frequency range (FR2)-level measurement gap.

Optionally, when measurement indicated by the first SMTC in the M SMTCs requires a measurement gap, the processing unit 720 is further configured to stop data transmission with the terminal device in a first measurement gap in the M measurement gaps, where the first measurement gap is obtained by the first SMTC.

Optionally, in an occasion of the M measurement gaps, the network device may also maintain data transmission with the terminal device. Whether the terminal device maintains data transmission with the network device in the occasion of the M measurement gaps may be independently determined by the terminal device.

In still another design, the communication apparatus 700 is configured to perform an action performed by the network device in the foregoing another method embodiment. The processing unit 720 is configured to generate configuration information of a plurality of measurement gaps. The transceiver unit 710 is configured to send the configuration information of the plurality of measurement gaps to a terminal device.

Optionally, the transceiver unit 710 is further configured to send indication information to the terminal device, to indicate to alternately use the plurality of measurement gaps.
In still another design, the communication apparatus 700 is configured to perform an action performed by the terminal device in the foregoing another method embodiment. The transceiver unit 710 is configured to receive configuration information that is of a plurality of measurement gaps and that is sent by a network device. The processing unit 720 is configured to alternately use the plurality of measurement gaps to perform measurement.

Optionally, the transceiver unit 710 is further configured to receive indication information sent by the network device, to indicate to alternately use the plurality of measurement gaps. The processing unit 720 is configured to alternately use the plurality of measurement gaps to perform measurement based on the indication information received by the transceiver unit 710 and valid time of each measurement gap.

In still another design, the communication apparatus 700 is configured to perform an action performed by the network device in still another method embodiment. The processing unit 720 is configured to generate configuration information of a plurality of measurement gaps, where the plurality of measurement gaps have an overlapping part. The transceiver unit 710 is configured to send the configuration information of the plurality of measurement gaps to a terminal device.

Optionally, the transceiver unit 710 is further configured to send indication information to the terminal device, to indicate priorities of the plurality of measurement gaps.

In still another design, the communication apparatus 700 is configured to perform an action performed by the terminal device in still another method embodiment. The transceiver unit 710 is configured to receive configuration information that is of a plurality of measurement gaps and that is sent by a network device, where the plurality of measurement gaps have an overlapping part. The processing unit 720 is configured to perform measurement based on configuration information of one of the plurality of measurement gaps.

Optionally, the transceiver unit 710 is further configured to receive indication information sent by the network device, to indicate priorities of the plurality of measurement gaps. The processing unit 720 is configured to perform measurement based on the indication information received by the transceiver unit 710 and configuration information of a measurement gap with a relatively high priority in the plurality of measurement gaps.

The processing unit 720 in the foregoing embodiment may be implemented by a processor or a processor-related circuit. The transceiver unit 710 may be implemented by a transceiver or a transceiver-related circuit. The transceiver unit 710 may also be referred to as a communication unit or a communication interface. The storage unit may be implemented by a memory.

As shown in FIG. 8, an embodiment of this application further provides a communication apparatus 800. The communication apparatus 800 includes a processor 810. The processor 810 is coupled to a memory 820. The memory 820 is configured to store a computer program, instructions, or data. The processor 810 is configured to execute the computer program, the instructions, or the data stored in the memory 820, so that the method in the foregoing method embodiments is performed.

Optionally, the communication apparatus 800 includes one or more processors 810.

Optionally, as shown in FIG. 8, the communication apparatus 800 may further include the memory 820.

Optionally, the communication apparatus 800 may include one or more memories 820.

Optionally, the memory 820 may be integrated with the processor 810, or disposed separately.

Optionally, as shown in FIG. 8, the communication apparatus 800 may further include a transceiver 830, and the transceiver 830 is configured to receive and/or send a signal. For example, the processor 810 is configured to control the transceiver 830 to receive and/or send a signal.

In a solution, the communication apparatus 800 is configured to implement an operation performed by the terminal device or a component (for example, a chip or a circuit) that may be used for the terminal device in the foregoing method embodiments.

For example, the processor 810 is configured to implement a processing-related operation performed by the terminal device or a component (for example, a chip or a circuit) that may be used for the terminal device in the foregoing method embodiments, and the transceiver 830 is configured to implement a transceiver-related operation performed by the terminal device or a component (for example, a chip or a circuit) that may be used for the terminal device in the foregoing method embodiments.

In another solution, the communication apparatus 800 is configured to implement an operation performed by the network device or a component (for example, a chip or a circuit) that may be used for the network device in the foregoing method embodiments.

For example, the processor 810 is configured to implement a processing-related operation performed by the network device or a component (for example, a chip or a circuit) that may be used for the network device in the foregoing method embodiments, and the transceiver 830 is configured to implement a transceiver-related operation performed by the network device or a component (for example, a chip or a circuit) that may be used for the network device in the foregoing method embodiments.

An embodiment of this application further provides a communication apparatus 900. The communication apparatus 900 may be a terminal device or a chip. The communication apparatus 900 may be configured to perform an operation performed by the terminal device or a component (for example, a chip or a circuit) that may be used for the terminal device in the foregoing method embodiments.

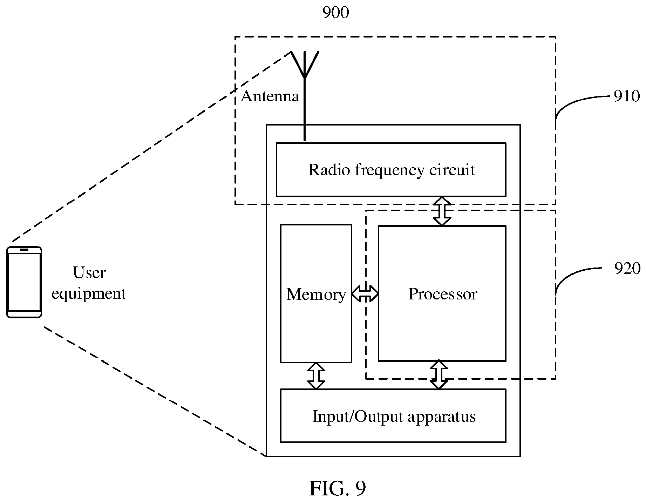

When the communication apparatus 900 is a terminal device, FIG. 9 is a simplified schematic diagram of a structure of a terminal device. For ease of understanding and illustration, in FIG. 9, an example in which the terminal device is a mobile phone is used. As shown in FIG. 9, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in an electromagnetic wave form. The input/output apparatus, such as a touchscreen, a display screen, and a keyboard, is mainly configured to receive data input by a user and output data to the user. It should be noted that some types of terminal devices may not have an input/output apparatus.

When data needs to be sent, the processor performs baseband processing on to-be-sent data, and outputs a baseband signal to the radio frequency circuit. After performing radio frequency processing on the baseband signal, the radio frequency circuit sends a radio frequency signal in an electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 9 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device.

As shown in FIG. 9, the terminal device includes a transceiver unit 910 and a processing unit 920. The transceiver unit 910 may also be referred to as a transceiver, a transceiver machine, a transceiver apparatus, or the like. The processing unit 920 may also be referred to as a processor, a processing board, a processing module, a processing apparatus, or the like.

Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The transceiver unit may also be sometimes referred to as a transceiver, a transceiver machine, a transceiver circuit, or the like. The receiving unit may also be sometimes referred to as a receiver, a receiver machine, a receiver circuit, or the like. The sending unit may also be sometimes referred to as a transmitter, a transmitter machine, a transmitter circuit, or the like.

For example, in an implementation, the processing unit 920 is configured to perform step S420 and step S430 in FIG. 4, and/or the processing unit 920 is further configured to perform another processing-related step performed by the terminal device in this embodiment of this application. The transceiver unit 910 is configured to perform step S410 in FIG. 4, and/or the transceiver unit 910 is further configured to perform another transceiver-related step performed by the terminal device.

It should be understood that FIG. 9 is merely an example instead of a limitation. The terminal device including the transceiver unit and the processing unit may not depend on the structure shown in FIG. 9.

When the communication apparatus 900 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a communication apparatus 1000. The communication apparatus 1000 may be a network device or a chip. The communication apparatus 1000 may be configured to perform an operation performed by the network device or a component (for example, a chip or a circuit) that may be used for the network device in the foregoing method embodiments.

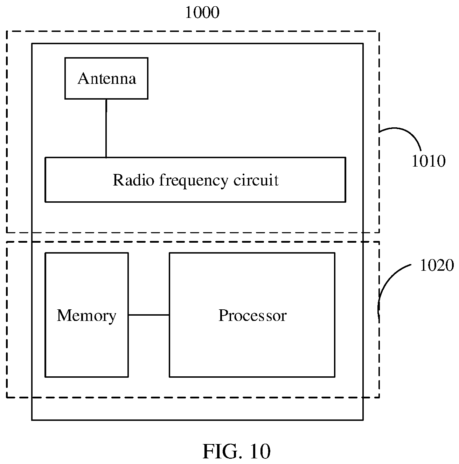

When the communication apparatus 1000 is a network device, for example, a base station, FIG. 10 is a simplified schematic diagram of a structure of a base station. The base station includes a part 1010 and a part 1020. The part 1010 is mainly configured to: send and receive a radio frequency signal, and perform conversion between the radio frequency signal and a baseband signal. The part 1020 is mainly configured to: perform baseband processing, control the base station, and the like. The part 1010 may usually be referred to as a transceiver unit, a transceiver machine, a transceiver circuit, a transceiver, or the like. The part 1020 is usually a control center of the base station, and may usually be referred to as a processing unit, and is configured to control the base station to perform a processing operation performed by the network device in the foregoing method embodiments.

The transceiver unit in the part 1010 may also be referred to as a transceiver, a transceiver machine, or the like, and includes an antenna and a radio frequency circuit, where the radio frequency circuit is mainly configured to perform radio frequency processing. Optionally, a component that is in the part 1010 and that is configured to implement a receiving function may be considered as a receiving unit, and a component that is in the part 1010 and that is configured to implement a sending function may be considered as a sending unit. In other words, the part 1010 includes the receiving unit and the sending unit. The receiving unit may also be referred to as a receiver, a receiver machine, a receiver circuit, or the like. The sending unit may be referred to as a transmitter, a transmitter machine, a transmitter circuit, or the like.

The part 1020 may include one or more boards, and each board may include one or more processors and one or more memories. The processor is configured to read and execute a program in the memory to implement a baseband processing function and control the base station. If there are a plurality of boards, the boards may be interconnected to enhance a processing capability. In an optional implementation, the plurality of boards may share one or more processors, the plurality of boards may share one or more memories, or the plurality of boards may simultaneously share one or more processors.

For example, in an implementation, the transceiver unit in the part 1010 is configured to perform the sending operation in step S410 in FIG. 4, and/or the transceiver unit in the part 1010 is further configured to perform another transceiver-related step performed by the network device in the embodiments of this application. The part 1020 is configured to perform a processing-related step performed by the network device in the embodiments of this application.

It should be understood that FIG. 10 is merely an example instead of a limitation. The network device including the transceiver unit and the processing unit may not depend on the structure shown in FIG. 10.

When the communication apparatus 1000 is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a computer-readable storage medium. The computer-readable storage medium stores computer instructions used to implement the method performed by the terminal device or the method performed by the network device in the foregoing method embodiments.

For example, when the computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

For explanations and beneficial effects of related content in any of the foregoing provided communication apparatuses, refer to the corresponding method embodiment provided above. Details are not described herein again.

In the embodiments of this application, the terminal device or the network device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (which is also referred to as a main memory). An operating system of the operating system layer may be any one or more of computer operating systems implementing service processing by using a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by a terminal device or a network device, or may be performed by a functional module that is in the terminal device or the network device and that can invoke and execute a program.

Aspects or features of this application may be implemented as a method, an apparatus or a product that uses standard programming and/or engineering technologies. The term "product" used in this specification may cover a computer program accessible from any computer-readable device, carrier, or medium. For example, a computer-readable medium may include but is not limited to: a magnetic storage device (for example, a hard disk, a floppy disk or a magnetic tape), an optical disc (for example, a compact disc (compact disc, CD) and a digital versatile disc (digital versatile disc, DVD)), a smart card, and a flash memory device (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel, and various other media that can store, include, and/or carry instructions and/or data.

It should be understood that, the processor mentioned in the embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor, or the like.

It should be further understood that the memory mentioned in the embodiments of this application may be a volatile memory, or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should be further noted that the memory described in this specification is intended to include, but is not limited to, these and any other suitable type of memory.

A person of ordinary skill in the art may be aware that, in combination with the examples described in the embodiments disclosed in this specification, units and steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

It may be clearly understood by a person skilled in the art that, for the purpose of convenient and brief description, for a detailed working process of the foregoing apparatus and unit, refer to a corresponding process in the foregoing method embodiments. Details are not described herein.

In the several embodiments provided in this application, it should be understood that the disclosed apparatus and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate parts may or may not be physically separate, and parts displayed as units may or may not be physical units, may be located in one position, or may be distributed on a plurality of network units. Some or all of the units may be selected based on an actual requirement to achieve an objective of the solutions of the embodiments.

In addition, functional units in the embodiments of this application may be integrated into one unit, or each of the units may exist alone physically, or two or more units are integrated into one unit.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like. For example, the foregoing usable medium may include but is not limited to any medium that can store program code, such as a USB flash drive, a removable hard disk, a read-only memory (read-only memory, ROM), a random access memory (random access memory, RAM), a magnetic disk, or an optical disc.

## Claims

1. A measurement method performed by a terminal device, the method comprising:
receiving (S410) N synchronization signal/physical broadcast channel block measurement timing configurations, SMTCs, from a network device; and
respectively obtaining (S420) M measurement gaps based on M SMTCs in the N SMTCs, wherein N and M are positive integers, **characterized in that** M is less than N, and the method further comprises:
receiving third indication information from the network device, wherein the third indication information is used to indicate that L measurement gaps in the M measurement gaps are shared, and L is a positive integer less than or equal to M, and
receiving fourth indication information from the network device, wherein the fourth indication information is used to indicate sharing information of each of the L measurement gaps, and the sharing information of each measurement gap comprises information about at least one SMTC in the N SMTCs except the M SMTCs,
wherein sharing information of one measurement gap is used to indicate an SMTC with which the measurement gap is shared.

2. The method according to claim 1, wherein the method further comprises:
receiving first indication information from the network device, wherein the first indication information is used to indicate that the M SMTCs have a function as a measurement gap respectively.

3. The method according to claim 1 or 2, wherein the method further comprises:
receiving second indication information from the network device, wherein the second indication information is used to indicate proportions respectively occupied by the M measurement gaps in the M SMTCs; and
the respectively obtaining M measurement gaps based on M SMTCs in the N SMTCs comprises:
determining the M measurement gaps based on the second indication information and the M SMTCs.

4. The method according to any one of claims 1 to 3, wherein the method further comprises:
receiving fifth indication information, wherein the fifth indication information is used to indicate measurement gap types of the M measurement gaps, and the measurement gap type comprises any one or more of the following: a user equipment-level measurement gap, a first frequency range, FR1-level, measurement gap, and a second frequency range, FR2-level, measurement gap.

5. The method according to any one of claims 1 to 4, wherein when measurement indicated by a first SMTC in the M SMTCs requires a measurement gap, the method further comprises:
performing measurement by using a first measurement gap in the M measurement gaps, wherein the first measurement gap is obtained by the first SMTC.

6. A measurement method performed by a network device, the method comprising:
generating N synchronization signal/physical broadcast channel block measurement timing configurations, SMTCs, wherein M SMTCs in the N SMTCs have a function as a measurement gap respectively; and
sending (S410) the N SMTCs to a terminal device, so that the terminal device respectively obtains M measurement gaps based on the M SMTCs, wherein N and M are positive integers,
**characterized in that**
M is less than N,
wherein the method further comprises:
sending third indication information to the terminal device, wherein the third indication information is used to indicate that L measurement gaps in the M measurement gaps are shared, and L is a positive integer less than or equal to M, and
sending fourth indication information to the terminal device, wherein the fourth indication information is used to indicate sharing information of each of the L measurement gaps, and the sharing information of each measurement gap comprises information about at least one SMTC in the N SMTCs except the M SMTCs, wherein sharing information of one measurement gap is used to indicate an SMTC with which the measurement gap is shared.

7. The method according to claim 6, wherein the method further comprises:
sending first indication information to the terminal device, wherein the first indication information is used to indicate that the M SMTCs have a function as a measurement gap respectively.

8. The method according to claim 6 or 7, wherein the method further comprises:
sending second indication information to the terminal device, wherein the second indication information is used to indicate proportions respectively occupied by the M measurement gaps in the M SMTCs.

9. The method according to any one of claims 6 to 8, wherein the method further comprises:
sending fifth indication information to the terminal device, wherein the fifth indication information is used to indicate measurement gap types of the M measurement gaps, and the measurement gap type comprises any one or more of the following: a user equipment-level measurement gap, a first frequency range, FR1-level, measurement gap, and a second frequency range, FR2-level, measurement gap.

10. The method according to any one of claims 6 to 9, wherein when measurement indicated by a first SMTC in the M SMTCs requires a measurement gap, the method further comprises:
stopping data transmission with the terminal device in a first measurement gap in the M measurement gaps, wherein the first measurement gap is obtained by the first SMTC.

11. A terminal device comprising units configured to implement the method according to any one of claims 1 to 5 , or a network device comprising units configured to implement the method according to any one of claims 6 to 10.

## Patentansprüche

1. Messerfahren, das durch eine Endgerätevorrichtung durchgeführt wird, wobei das Verfahren Folgendes umfasst:
Empfangen (S410) von N Synchronisationssignal-/physikalischen Broadcast-Kanalblock-Messzeitkonfigurationen, SMTCs, von einer Netzwerkvorrichtung; und
jeweiliges Erlangen (S420) von M Messlücken basierend auf M SMTCs in den N SMTCs, wobei N und M positive ganze Zahlen sind, **dadurch gekennzeichnet, dass** M kleiner als N ist und das Verfahren ferner Folgendes umfasst:
Empfangen dritter Anzeigeinformationen von der Netzwerkvorrichtung, wobei die dritten Anzeigeinformationen verwendet werden, um anzuzeigen, dass L Messlücken in den M Messlücken freigegeben sind und L eine positive ganze Zahl ist, die kleiner oder gleich M ist, und
Empfangen von vierten Anzeigeinformationen von der Netzwerkvorrichtung, wobei die vierten Anzeigeinformationen verwendet werden, um Freigabeinformationen jeder der L Messlücken anzuzeigen, und die Freigabeinformationen jeder Messlücke Informationen über mindestens eine SMTC in den N SMTCs mit Ausnahme der M SMTCs umfassen,
wobei die Freigabeinformationen einer Messlücke verwendet werden, um eine SMTC anzuzeigen, mit welcher die Messlücke freigegeben wird.

2. Verfahren nach Anspruch 1, wobei das Verfahren ferner Folgendes umfasst:
Empfangen erster Anzeigeinformationen von der Netzwerkvorrichtung, wobei die ersten Anzeigeinformationen verwendet werden, um anzuzeigen, dass die M SMTCs jeweils eine Funktion als eine Messlücke aufweisen.

3. Verfahren nach Anspruch 1 oder 2, wobei das Verfahren ferner Folgendes umfasst:
Empfangen zweiter Anzeigeinformationen von der Netzwerkvorrichtung, wobei die zweiten Anzeigeinformationen verwendet werden, um Anteile anzuzeigen, die jeweils durch die M Messlücken in den M SMTCs belegt werden; und
das jeweilige Erlangen von M Messlücken basierend auf M SMTCs in den N SMTCs Folgendes umfasst:
Bestimmen der M Messlücken basierend auf den zweiten Anzeigeinformationen und den M SMTCs.

4. Verfahren nach einem der Ansprüche 1 bis 3, wobei das Verfahren ferner Folgendes umfasst:
Empfangen von fünften Anzeigeinformationen, wobei die fünften Anzeigeinformationen verwendet werden, um Messlückentypen der M Messlücken anzuzeigen, und der Messlückentyp eine beliebige oder mehrere der Folgenden umfasst: eine Messlücke auf Benutzergeräteebene, eine Messlücke auf Ebene eines ersten Frequenzbereichs, FR1-Ebene, und eine Messlücke auf Ebene eines zweiten Frequenzbereichs, FR2-Ebene.

5. Verfahren nach einem der Ansprüche 1 bis 4, wobei, wenn eine durch eine erste SMTC in den M SMTCs angezeigte Messung eine Messlücke erfordert, das Verfahren ferner Folgendes umfasst:
Durchführen einer Messung unter Verwendung einer ersten Messlücke in den M Messlücken, wobei die erste Messlücke durch die erste SMTC erlangt wird.

6. Messerfahren, das durch eine Netzwerkvorrichtung durchgeführt wird, wobei das Verfahren Folgendes umfasst:
Generieren von N Synchronisationssignal-/physikalischen Broadcast-Kanalblock-Messzeitkonfigurationen, SMTCs, wobei M SMTCs in den N SMTCs jeweils eine Funktion als eine Messlücke aufweisen; und
Senden (S410) der N SMTCs an eine Endgerätevorrichtung, sodass die Endgerätevorrichtung jeweils M Messlücken basierend auf den M SMTCs erlangt, wobei N und M positive ganze Zahlen sind,
**dadurch gekennzeichnet, dass**
M kleiner als N ist,
wobei das Verfahren ferner Folgendes umfasst:
Senden dritter Anzeigeinformationen an die Netzwerkvorrichtung, wobei die dritten Anzeigeinformationen verwendet werden, um anzuzeigen, dass L Messlücken in den M Messlücken freigegeben sind und L eine positive ganze Zahl ist, die kleiner oder gleich M ist, und
Senden vierter Anzeigeinformationen an die Endgerätevorrichtung, wobei die vierten Anzeigeinformationen verwendet werden, um Freigabeinformationen jeder der L Messlücken anzuzeigen, und die Freigabeinformationen jeder Messlücke Informationen über mindestens eine SMTC in den N SMTCs mit Ausnahme der M SMTCs umfassen, wobei Freigabeinformationen einer Messlücke verwendet werden, um eine SMTC anzuzeigen, mit welcher die Messlücke freigegeben wird.

7. Verfahren nach Anspruch 6, wobei das Verfahren ferner Folgendes umfasst:
Senden erster Anzeigeinformationen an die Endgerätevorrichtung, wobei die ersten Anzeigeinformationen verwendet werden, um anzuzeigen, dass die M SMTCs jeweils eine Funktion als eine Messlücke aufweisen.

8. Verfahren nach Anspruch 6 oder 7, wobei das Verfahren ferner Folgendes umfasst:
Senden zweiter Anzeigeinformationen an die Endgerätevorrichtung, wobei die zweiten Anzeigeinformationen verwendet werden, um Anteile anzuzeigen, die jeweils durch die M Messlücken in den M SMTCs belegt werden.

9. Verfahren nach einem der Ansprüche 6 bis 8, wobei das Verfahren ferner Folgendes umfasst:
Senden fünfter Anzeigeinformationen an die Endgerätevorrichtung, wobei die fünften Anzeigeinformationen verwendet werden, um Messlückentypen der M Messlücken anzuzeigen, und der Messlückentyp eine beliebige oder mehrere der Folgenden umfasst: eine Messlücke auf Benutzergeräteebene, eine Messlücke auf Ebene eines ersten Frequenzbereichs, FR1-Ebene, und eine Messlücke auf Ebene eines zweiten Frequenzbereichs, FR2-Ebene.

10. Verfahren nach einem der Ansprüche 6 bis 9, wobei, wenn eine durch eine erste SMTC in den M SMTCs angezeigte Messung eine Messlücke erfordert, das Verfahren ferner Folgendes umfasst:
Anhalten der Datenübertragung mit der Endgerätevorrichtung in einer ersten Messlücke in den M Messlücken, wobei die erste Messlücke durch die erste SMTC erlangt wird.

11. Endgerätevorrichtung, umfassend Einheiten, die dazu konfiguriert sind, das Verfahren nach einem der Ansprüche 1 bis 5 durchzuführen, oder Netzwerkvorrichtung, umfassend Einheiten, die dazu konfiguriert sind, das Verfahren nach einem der Ansprüche 6 bis 10 durchzuführen.

## Revendications

1. Procédé de mesure mis en œuvre par un dispositif terminal, le procédé comprenant :
la réception (S410) de N configurations de synchronisation de mesure de bloc de canal de diffusion physique/signal de synchronisation, SMTC, à partir d'un dispositif réseau ; et
l'obtention respective (S420) de M intervalles de mesure sur la base de M SMTC dans les N SMTC, dans lequel N et M sont des entiers positifs, **caractérisé en ce que** M est inférieur à N, et le procédé comprend également :
la réception de troisièmes informations d'indication en provenance du dispositif réseau, dans lequel les troisièmes informations d'indication sont utilisées pour indiquer que L intervalles de mesure dans les M intervalles de mesure sont partagés, et L est un entier positif inférieur ou égal à M, et la réception de quatrièmes informations d'indication en provenance du dispositif réseau, dans lequel les quatrièmes informations d'indication sont utilisées pour indiquer des informations de partage de chacun des L intervalles de mesure, et les informations de partage de chaque intervalle de mesure comprennent des informations sur au moins une SMTC dans les N SMTC à l'exception des M SMTC,
dans lequel les informations de partage d'un intervalle de mesure sont utilisées pour indiquer une SMTC avec laquelle l'intervalle de mesure est partagé.

2. Procédé selon la revendication 1, dans lequel le procédé comprend également :
la réception de premières informations d'indication en provenance du dispositif réseau, dans lequel les premières informations d'indication sont utilisées pour indiquer que les M SMTC ont une fonction comme intervalle de mesure respectivement.

3. Procédé selon la revendication 1 ou 2, dans lequel le procédé comprend également :
la réception de deuxièmes informations d'indication en provenance du dispositif réseau, dans lequel les deuxièmes informations d'indication sont utilisées pour indiquer des proportions respectivement occupées par les M intervalles de mesure dans les M SMTC ; et
l'obtention respective de M intervalles de mesure sur la base des M SMTC dans les N SMTC comprend :
la détermination des intervalles de mesure M sur la base des deuxièmes informations d'indication et des M SMTC.

4. Procédé selon l'une quelconque des revendications 1 à 3, dans lequel le procédé comprend également :
la réception de cinquièmes informations d'indication, dans lequel les cinquièmes informations d'indication sont utilisées pour indiquer des types d'intervalle de mesure des M intervalles de mesure, et le type d'intervalle de mesure comprend l'un quelconque ou plusieurs des éléments suivants : un intervalle de mesure au niveau de l'équipement utilisateur, un intervalle de mesure au niveau d'une première plage de fréquences, FR1, et un intervalle de mesure au niveau d'une seconde plage de fréquences, FR2.

5. Procédé selon l'une quelconque des revendications 1 à 4, dans lequel, lorsqu'une mesure indiquée par une première SMTC dans les M SMTC nécessite un intervalle de mesure, le procédé comprend également :
l'exécution d'une mesure en utilisant un premier intervalle de mesure dans les M intervalles de mesure, dans lequel le premier intervalle de mesure est obtenu par la première SMTC.

6. Procédé de mesure mis en œuvre par un dispositif réseau, le procédé comprenant :
la génération de N configurations de synchronisation de mesure de bloc de canal de diffusion physique/signal de synchronisation, SMTC, dans lequel M SMTC dans les N SMTC ont respectivement une fonction d'intervalle de mesure ; et
l'envoi (S410) des N SMTC à un dispositif terminal, de sorte que le dispositif terminal obtienne respectivement M intervalles de mesure sur la base des M SMTC, dans lequel N et M sont des entiers positifs,
**caractérisé en ce que**
M est inférieur à N,
dans lequel le procédé comprend également :
l'envoi de troisièmes informations d'indication au dispositif terminal, dans lequel les troisièmes informations d'indication sont utilisées pour indiquer que L intervalles de mesure dans les M intervalles de mesure sont partagés, et L est un entier positif inférieur ou égal à M, et
l'envoi de quatrièmes informations d'indication au dispositif terminal, dans lequel les quatrièmes informations d'indication sont utilisées pour indiquer des informations de partage de chacun des L intervalles de mesure, et les informations de partage de chaque intervalle de mesure comprend des informations sur au moins une SMTC dans les N SMTC à l'exception des M SMTC, dans lequel les informations de partage d'un intervalle de mesure sont utilisées pour indiquer une SMTC avec laquelle l'intervalle de mesure est partagé.

7. Procédé selon la revendication 6, dans lequel le procédé comprend également :
l'envoi de premières informations d'indication au dispositif terminal, dans lequel les premières informations d'indication sont utilisées pour indiquer que les M SMTC ont une fonction comme intervalle de mesure respectivement.

8. Procédé selon la revendication 6 ou 7, dans lequel le procédé comprend également :
l'envoi de deuxièmes informations d'indication au dispositif terminal, dans lequel les deuxièmes informations d'indication sont utilisées pour indiquer des proportions respectivement occupées par les M intervalles de mesure dans les M SMTC.

9. Procédé selon l'une quelconque des revendications 6 à 8, dans lequel le procédé comprend également :
l'envoi de cinquièmes informations d'indication au dispositif terminal, dans lequel les cinquièmes informations d'indication sont utilisées pour indiquer des types d'intervalle de mesure des M intervalles de mesure, et le type d'intervalle de mesure comprend l'un quelconque ou plusieurs des éléments suivants : un intervalle de mesure au niveau de l'équipement utilisateur, un intervalle de mesure au niveau d'une première plage de fréquences, FR1, et un intervalle de mesure d'une seconde plage de fréquences, FR2.

10. Procédé selon l'une quelconque des revendications 6 à 9, dans lequel, lorsqu'une mesure indiquée par une première SMTC dans les M SMTC nécessite un intervalle de mesure, le procédé comprend également :
l'arrêt de la transmission de données avec le dispositif terminal dans un premier intervalle de mesure parmi les M intervalles de mesure, dans lequel le premier intervalle de mesure est obtenu par la première SMTC.

11. Dispositif terminal comprenant des unités configurées pour mettre en œuvre le procédé selon l'une quelconque des revendications 1 à 5, ou un dispositif réseau comprenant des unités configurées pour mettre en œuvre le procédé selon l'une quelconque des revendications 6 à 10.
